# EUROPEAN PATENT SPECIFICATION

(11) **EP 3 204 636 B1**
(45) Date of publication and mention of the grant of the patent: **14.08.2019**
(21) Application number: 14903681.6
(22) Date of filing: 10.10.2014
(51) Int. Cl.: F03D 9/25, F03D 7/00, H02J 3/38, H02J 11/00

(54) **METHOD AND SYSTEM FOR PROTECTING WIND FARM DURING DISCONNECTION TO UTILITY GRID**
VERFAHREN UND SYSTEM ZUM SCHUTZ EINER WINDENERGIEANLAGE WÄHREND EINER TRENNUNG VOM VERSORGUNGSNETZ
PROCÉDÉ ET SYSTÈME DE PROTECTION DE PARC ÉOLIEN LORS D'UNE DÉCONNEXION VIS-À-VIS D'UN RÉSEAU ÉLECTRIQUE

(43) Date of publication of application: 16.08.2017
(73) Proprietor: ABB Schweiz AG, 5400 Baden (CH)
(72) Inventor: CHEN, Yao, Beijing 100006 (CN); HUANG, Xing, Beijing 100024 (CN); LIU, Kai, Beijing 100025 (CN); WANG, Qingping, Beijing 100085 (CN)
(74) Representative: Kolster Oy Ab
(86) International application number: PCT/CN2014/088273
(87) International publication number: WO 2016/054799

(56) References cited:
- EP-A2- 1 752 659
- CN-A- 102 439 299
- CN-A- 102 694 382
- CN-A- 103 362 740
- CN-A- 103 548 228
- US-A1- 2009 147 412
- US-A1- 2011 175 355
- GAJIC Z: "Differential Protection for Special Industrial Transformers", IEEE TRANSACTIONS ON POWER DELIVERY, IEEE SERVICE CENTER, NEW YORK, NY, US, vol. 22, no. 4, 1 October 2007 (2007-10-01), pages 2126-2131, XP011191843, ISSN: 0885-8977, DOI: 10.1109/TPWRD.2007.905561
- AYERS LEE ET AL: "Protecting distribution substation assets - Modern protection schemes with microprocessor-based re", 2013 66TH ANNUAL CONFERENCE FOR PROTECTIVE RELAY ENGINEERS, IEEE, 8 April 2013 (2013-04-08), pages 143-149, XP032598349, DOI: 10.1109/CPRE.2013.6822033 [retrieved on 2014-05-27]

## Description

### Technical Field

The invention relates to method and system for protecting wind farm, in particular relates to method and system for protecting wind farm during its disconnection to utility grid.

### Background Art

It has been well defined that all offshore installations/units, an independent emergency source of electrical power is to be provided, which should be able to take over the supply of the emergency consumers, e.g. lighting and important communications and signalling systems, etc., when the main power supply fails; and the supply time period should meet the requirement from e.g. several hours to several days for different loads. Offshore wind farm is one typical offshore application which is expected to grow in a steady pace and the installed power is expected to increase. The electrical system design should also comply with the requirements for emergency auxiliary load supply, including navigation lights, sensor and communication apparatus, ventilation and heating equipment etc., when the whole wind farm is disconnected from the onshore grid, e.g. in the circumstance of export cable failure.

Patent EP 2 236 821 A describes a method and a system for island operation of at least two wind turbines associated with a wind farm, wherein said wind farm is configured for providing power generated by wind turbines in said wind farm to a main grid and wherein the method comprises: detecting at least two or more deactivated wind turbines in said wind farm, said deactivated wind turbines being disconnected from said main grid; configuring at least one islanded local grid for electrically connecting said two or more deactivated wind turbines; activating at least one of said deactivated wind turbine using a black start operation; and, connecting said at least one activated wind turbine and at least one of said deactivated wind turbines to said local grid, said activated wind turbine acting as a power supply for said at least one deactivated wind turbine connected to said local grid. However, patent EP 2 236 821 does not consider various faults that may occur in the wind farm during islanding mode due to characteristics like multiple fault current sources, bi-directional of fault currents, and variable system architecture related to the wind speed, wind turbine conditions and the control strategies. Neither does it consider that a fault current threshold for overcurrent protection may vary according to various configuration of the wind farm, for example, the power supplied by the generator of the other wind turbine, reactive power absorbed by the converter of the other wind turbine, reactive power induced by the at least one cable, power supplied by the external generator, and so on; in contrast, wind farm during normal condition where fault current threshold is normally predetermined based on the capacity of the utility grid playing a dominate role in affecting the magnitude of the fault current.

The concept of using diesel generator for supplying the auxiliary loads has been disclosed in patent EP 1 752 659 A. The method of operating an offshore wind energy park involves detecting deterioration in the power grid or a signal to allow preparation of the operation of a transfer grid. An emergency power source, such as a diesel generator is placed into operation and its output is stepped up using transformers to the power level produced by the park. The regulated input can be provided via a current limiter. However, patent EP 1 752 659 A does not consider various faults that may occur in the wind farm during islanding mode due to characteristics like multiple fault current sources, bi-directional of fault currents, and variable system architecture related to the wind speed, wind turbine conditions and the control strategies, too. And, it is silent about setting various fault current threshold for overcurrent protection according to various configuration of wind farm as well.

Whether to use wind turbine and/or external generator for active and/or reactive power contribution during islanding mode, or even other types of energy sources to partially or fully replace them, these types of auxiliary power supply solution cannot work reliably without proper design on the protection scheme.

Patent WO2012155975 A discloses a differential protection system including a plurality of inputs power cables for transfer of power from electric power generators, such as wind power generators, to an output cable. Each input and output power cable is provided with a respective switch. The protection system includes a plurality of protection equipment unit each being adapted to be arranged at a respective one of the input cables or at the output cable, each protection equipment unit including a measuring unit for measuring the current and voltage of the cable, and including a control unit being operatively connectable to the switch of the respective power cable for selectively tripping the switch when the protection system discovers a differential fault. However, patent WO2012155975 A focuses on differential protection system for a multi-ended cable network of a power transfer system in a wind power plant; and it does not address problem concerning fault detection and protection mechanism used for wind farm operating in islanding mode where a wind turbine and/external generator are used for supplying power to the auxiliary equipment of the wind turbines, and it is silent about setting various fault current threshold for overcurrent protection according to various configuration of wind farm, and the necessary coordination between differential protections and overcurrent protections as well.

US 2011/0175355 discloses a turbine farm comprises a plurality of individual turbines each having an auxiliary component circuit. The farm further comprises; a master transformer arranged to be coupled between each of the plurality of individual turbines and an electrical grid and an auxiliary transformer coupled between the sub-station transformer and the auxiliary component circuit in each of the individual turbines. When in use power is transmitted from the sub-station transformer back to each auxiliary component circuit.

The article by GAJIC Z: "Differential Protection for Special Industrial Transformers", IEEE Transactions on power delivery, IEEE service centre, New York, NY, US, vol. 22, no. 4, 1 October 2007 (2007-10-01), pages 2126-2131, shows that it is possible to provide differential protection for special industrial transformers, such as 24-pulse converter transformers, by using standard numerical transformer differential protection relays and external interposing current transformers (CTs). The external interposing CTs can be designed in a standardized way. This approach will significantly simplify the application of differential protection for special industrial transformers.

### Brief Summary of the Invention

It is therefore an objective of the invention to provide a protection method for a wind farm disconnected to a utility grid, wherein the wind farm comprises a plurality of wind turbines, and each of the wind turbine comprises auxiliary equipment, a transformer unit and a generator, the transformer unit has a first winding circuit electrically connectable to input of the auxiliary equipment, a second winding circuit electrically connectable to output of the generator via a converter, a third winding circuit electrically connectable to the respective one of at least one cable; the protection method comprising: electrically connecting auxiliary equipment of the plurality of wind turbines to the first circuit winding of the transformer unit of the respective one of the plurality of wind turbines; electrically connecting the third winding circuit of the respective one of the plurality of wind turbines to the respective one of the at least one cable; selecting a first wind turbine of the plurality of wind turbines; electrically connecting the generator of the first wind turbine to the second winding circuit of the transformer unit of the first wind turbine for supplying power to auxiliary equipment of the first wind turbine via the transformer unit of the first wind turbine; the generator of the first wind turbine supplying power to auxiliary equipment of other wind turbine via the transformer unit of the first wind turbine, the respective one of the at least one cable connecting the first wind turbine and the other wind turbine, and the transformer unit of the other wind turbine; for each of the plurality of wind turbines, measuring a first set of current vectors flowing at the electrical connection extending from its transformer unit to its auxiliary equipment, from its transformer unit to its generator, and from its transformer unit to the cable, judging a first fault in consideration of the first set of current vectors by using differential current criterion, and adapting configuration of the wind farm: by disconnecting the electrical connection extending from the second winding circuit of its transformer unit to the output of its generator and the electrical connection extending from the third winding circuit of its transformer unit to the cable if the first fault was detected, otherwise maintaining the configuration of the wind farm; and for each of the plurality of the first wind turbines free of the first fault, judging a second fault in consideration of operation status and the adapted configuration of the wind farm, and the first current vector flowing at the electrical connection extending from its transformer unit to its generator, and further adapting the configuration of the wind farm by: opening the electrical connection extending from the second winding circuit of its transformer unit to its generator if the second fault was detected, otherwise maintaining the adapted configuration of the wind farm.

According to another aspect of present invention, it provides a protection system for a wind farm disconnected to a utility grid, wherein the wind farm comprises a plurality of wind turbines, and each of the wind turbine comprises auxiliary equipment, a transformer unit and a generator, the transformer unit has a first winding circuit electrically connected to input of the auxiliary equipment via a first switch, a second winding circuit electrically connected to output of the generator via a converter and a second switch, a third winding circuit electrically connected to the respective one of at least one cable via a third switch; for each of the plurality of wind turbines, the protection system comprising: a first measuring unit, a second measuring unit, a third measuring unit, being adapted for respectively measuring a first set of current vectors flowing at its first switch, its second switch, and its third switch; and a control system, being adapted for: controlling to close the first switch and the third switch of the plurality of wind turbines; selecting a first wind turbine of the plurality of wind turbines, controlling the generator of the first wind turbine to supply power to auxiliary equipment of the first wind turbine and supplying power to auxiliary equipment of other wind turbine by closing its second switch, judging a first fault of one of the plurality of wind turbines in consideration of its first set of current vectors by using differential current criterion, controlling to adapt configuration of the wind farm by: opening the second and the third switch of the wind turbine if the first fault was detected, otherwise maintaining the configuration of the wind farm; judging a second fault of the first wind turbine free of the first fault in consideration of operation status and the adapted configuration of the wind farm, and the first current vector flowing at its second switch, and controlling to further adapt the configuration of the wind farm by: opening the second switch of the first wind turbine if the second fault was detected, otherwise maintaining the adapted configuration of the wind farm.

By having the protection method and the protection system, the threshold setting for overcurrent protection scheme can be adapted to the configuration of the wind farm and operation of its components in islanding mode, thus reliability and sensitivity is improved.

### Brief Description of the Drawings

The subject matter of the invention will be explained in more detail in the following text with reference to preferred exemplary embodiments which are illustrated in the drawings, in which:
Figure 1 schematically illustrates a wind farm according to an embodiment of present invention;
Figure 2 shows a flowchart for calculating the overcurrent threshold according to an embodiment of present invention;
Figure 3 shows an equivalent circuit of the system according to an embodiment of present invention;
Figure 4 shows an equivalent circuit of the system according to an embodiment of present invention; and
Figure 5 shows an equivalent circuit of the system according to an embodiment of present invention.

The reference symbols used in the drawings, and their meanings, are listed in summary form in the list of reference symbols. In principle, identical parts are provided with the same reference symbols in the figures.

### Preferred Embodiments of the Invention

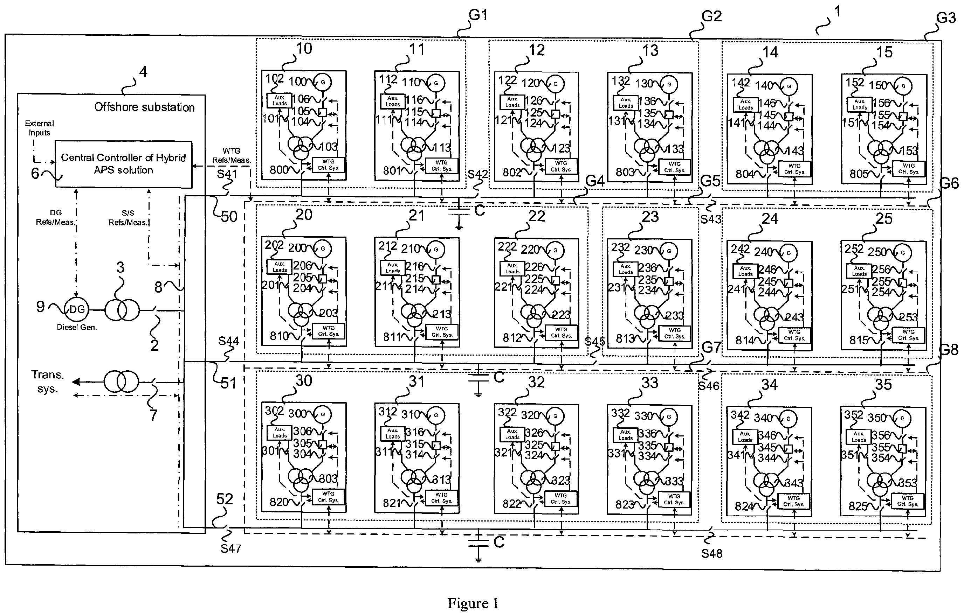

Figure 1 schematically illustrates a wind farm according to an embodiment of present invention. As shown in figure 1, the wind farm 1 includes a plurality of wind turbines 10-15, 20-25, 30-35, a substation 4, at least one cable 50, 51, 52 and a control system 6. Each of the cables 50, 51, 52 is electrically connectable to a utility grid via a system switch 7, for example a circuit breaker. The system switch 7 can be opened where a fault in the utility grid occurred. The wind turbines can be arranged in a multiple of groups, for example in eight groups G1-G8 and each of the wind turbine group consists of at least one wind turbine. As shown in figure 1, group G1 consists of the wind turbines 10-11, group G2 consists of the wind turbines 12-13, group G3 consists of the wind turbines 14-15, group G4 consists of the wind turbines 20-22, group G5 consists of the wind turbine 23, group G6 consists of the wind turbines 24-25, group G7 consists of the wind turbines 30-33, and group G8 consists of the wind turbines 34-35.

Each of the wind turbines 10-15 of groups G1, G2 and G3 is electrically connectable to the cable 50 via respective one of third switches 800 - 805, each of the wind turbines 20-25 of groups G4, G5, G6 is electrically connectable to the cable 51 via respective one of third switches 810-815, and each of the wind turbines 30-35 of groups G7, G8 is electrically connectable to the cable 52 via respective one of third switches 820-825. The skilled person shall understand that the number of cable can be equal or above one, and the wind turbines can be arranged in one or more group to deliver energy to the one or more cables. Where there is more than one cable 50, 51, 52, the wind farm 1 can include a bus bar 8 arranged between the system switch 7 and the respective cable 50, 51, 52 and electrically connecting the system switch 7 and the respective cable 50, 51, 52. Between the utility grid and the system switch 7, in the substation 4 one or more transformers may be arranged to transform a voltage supplied by the wind turbines to a higher voltage, and the system switch 7 can be arranged in the substation 4 as well.

Besides the third switches 800 - 805, 810-815, 820-825, each of wind turbines 10-15, 20-25, 30-35 includes a generator 100-150, 200-250, 300-350, a first switch 101-151, 201-251, 301-351, auxiliary equipment 102-152, 202-252, 302-352, a transformer unit 103-153, 203-253, 303-353, a second switch 104-154, 204-254, 304-354, a converter 105-155, 205-255, 305-355, and a sixth switch 106-156, 206-256, 306-356. The transformer unit 103-153, 203-253, 303-353 has a first winding circuit electrically connectable to input of the auxiliary equipment 102-152, 202-252, 302-352 via the first switch 101-151, 201-251, 301-351, a second winding circuit electrically connectable to the converter 105-155, 205-255, 305-355 via the second switch 104-154, 204-254, 304-354 and further to the generator 100-150, 200-250, 300-350 via the sixth switch 106-156, 206-256, 306-356, a third winding circuit electrically connectable to the respective one of at least one cable via the respective third switch 800-805, 810-815, 820-825. The respective generator 100-150, 200-250, 300-350 can supply energy to the respective converter105-155, 205-255,305-355. Each converter 105-155, 205-255, 305-355 converts a generally variable frequency energy stream delivered from the generator 100-150, 200-250, 300-350 to a fixed frequency energy stream supplied to the respective one of the cable 50, 51, 52. The fixed frequency energy stream supplied to the respective one of the cable 50, 51, 52 is supplied via the respective the second switch 104-154, 204-254, 304-354, the respective transformer unit 103-153, 203-253, 303-353 and the respective third switch 800-805, 810-815, 820-825.

The cables 50, 51, 52 comprise distributed capacitance which may result in generation of reactive power. The effect of the distributed capacitance is denoted by capacitor C besides the respective cable.

The wind farm 1 can also include an external generator 9 located inside the substation 4, which can be electrically connectable to the cable 50, 51, 52 via a transformer 3, fifth switch 2 and the respective bus bar 8. The external generator can be for example a diesel generator.

During normal operation, energy can be delivered from the respective one of the wind turbines 10-15, 20-25, 30-35 to the utility grid via the respective closed second switch 104-154, 204-254, 304-354, the respective closed third switch 800-805, 810-815, 820-825, and the respective one of the cables 50, 51, 52, and the closed system switch 7.

Where the wind farm 1 operates in islanding mode with the activated wind turbine providing power to the auxiliary equipment of the deactivated wind turbines, or a combination of the external generator and the activated wind turbine providing power to the auxiliary equipment, at least a first fault F1 and a second fault F2 may occur within some of the wind turbines no matter activated or deactivated. In particular, the first fault F1 involves short circuit to the electrical connection from the first switch to the first winding circuit or the first winding circuit itself, the electrical connection from the second switch to the second winding circuit or the second winding circuit itself, and/or the electrical connection from the third switch to the third winding circuit or the third wind circuit itself of the transformer unit of the wind turbine; for example, the first fault F1 may occur where the electrical connection extending from the first winding circuit of the transformer unit to the auxiliary equipment has a short circuit to the ground, or the first winding circuit itself is electrically coupled to the ground in short circuit, and the same applies to the second winding circuit and the third winding circuit of the transformer unit of the wind turbine. The second fault F2 focuses on short circuit to the electrical connection from the second switch to the generator of the wind turbine of the generator of the wind turbine itself.

There are various fault protection principles can be used at least for the first fault F1 and the second F2, for example differential current protection scheme and overcurrent protection scheme. Differential current protection is a well-known method for protecting transmission lines. When a fault occurs in a protected zone, a differential current is created, which current causes a protective relay to operate and trip circuit breakers and disconnect the faulted equipment. Overcurrent protection applies where magnitude of current exceeds a threshold and causes a protective relay to operate and trip circuit breaker to disconnect the faulted equipment. Whichever protection principle is adopted, it requires for measurement of current vector that contains the magnitude and direction of the relevant current. Take differential current protection for example, assuming I1 and I2 are the measured current vectors flowing in and out of a circuit to be protected. In normal operation, I1 and I2 have the same magnitude but opposition direction, i.e. I1+I2=0. However if a fault occurs within the circuit, the summation of I1 and I2 will no longer be zero due to the fault current. Therefore, by calculating the summation of I1 and I2, and judging whether the summation is above zero (or a given threshold), the fault condition of the circuit can be determined with differential current protection scheme. For overcurrent protection, assuming I1 is the measured current vector that flowing into a device to be protected. In normal operation, I1 should be no higher than the rated current of the device. However if a fault occurs within the device, I1 will be far larger than the normal value if there are external power sources which inject the fault currents to the fault point within the device. Therefore, by judging whether the magnitude of the current flowing into the device is higher than a given threshold, the fault condition of the device can be determined with overcurrent protection scheme.

As shown in figure 1, for each of the plurality of wind turbines the protection system for the wind farm 1 includes a first measuring unit M1, a second measuring unit M2, a third measuring unit M3 for measuring a current vector. For example as regards the wind turbine 10, the first measuring unit M1, the second measuring unit M2 and the third measuring unit M3 are respectively arranged at its first switch 101, its second switch 104, and its third switch 800. The measuring unit M1, the second measuring unit M2 and the third measuring unit M3 are respectively adapted for measuring a first set of values for the currents flowing at the electrical connection extending from its transformer unit 103 to its auxiliary equipment 102, the current flowing at the electrical connection extending from its transformer unit 103 and its generator 100, and the current flowing at the electrical connection extending from its transformer unit 103 and the cable 50. For example, they can be adapted for respectively sampling into a first set of magnitudes of the current flowing at the first switch 101, the second switch 104, and the third switch 800 and their directions. So can they be for the other wind turbines 11-15, 20-25, 30-35.

During a fault condition in the utility grid, the system switch 7 can be opened such that the wind turbines 10-15, 20-25, 30-35 are electrically disconnected to the utility grid. For example, the circuit breaker automatically opens to protect an electrical circuit from damage caused by overload or short circuit. Further, all of the third switches 800-805, 810-815, 820-825 connecting the wind turbines 10-15, 20-25, 30-35 to the cables 50, 51, 52 will be opened as well. So can be the first switch 101-151, 201-251, 301-351, the second switch 104-154, 204-254, 304-354. Following that, the control system 6 can select one of the deactivated wind turbines 10-15, 20-25, 30-35 as the first wind turbine and instruct the selected wind turbine (the first wind turbine) to initiate a start-up procedure, for example wind turbine 22 is selected and becomes activated. Such start-up procedures are well known in the art. The control system 6 connects its auxiliary equipment 222 to its generator 220 by closing the first switch 221, the second switch 224, and the sixth switch 226 of the wind turbine 22 so that the generator 220 can supply power to the auxiliary equipment 222 via the converter 225 and the transformer unit 223 of the wind turbine 22. Further, the control system 6 connects the wind turbine 22 to the cable 51 by closing the the third switch 812 of the wind turbine 22 so that the first wind turbine 22 can supply power to auxiliary equipment of other wind turbine via the transformer unit 223 of the first wind turbine, the respective one of the at least one cable 50, 51, 52 connecting the first wind turbine and the other wind turbine, and the transformer unit of the other wind turbine. For example, the control system 6 connects the auxiliary equipment 202 of the deactivated wind turbine 20 to the cable 51 by closing the third switch 810 of the deactivated wind turbine 20 and closing the first switch 201; in a similar way, the control system 6 connects the auxiliary equipment of the other deactivated wind turbines to the local grid, which is powered by the activated wind turbine 22. To this end, the wind farm 1 operates in an islanding mode. The first wind turbine can also be operated by connecting its converter to the wind farm while leaving its generator disconnected. Take wind turbine 22 as an example, the control system 6 can control to close its second switch 224 and third switch 812 while keeping its six switch 226 off, thus electrically connecting its converter 225 to the cable 51 via the closed second 224 while leaving its generator disconnected to the cable 51 by the open sixth switch 226. The converter connected to the cable can compensate the reactive power that is introduced by the dissipated capacitance along the cable.

The control system 6 can identify which configuration the wind farm 1 defines and control to switch the on/off state of the first switch 101-151, 201-251, 301-351, the second switch 104-154, 204-254, 304-354, the third switch 800-805, 810-815, 820-825, the sixth switch 106-156, 206-256, 306-356, and the fifth switch 2 so as to adapt the wind farm configuration. The wind farm configuration varies from various states of the switches in the wind farm. For example, the control system 6 can send command to the switches so that they act switch accordingly, either from on to off or vice versa. The first switch, the second switch, the third switch, the fifth switch and the sixth switch can be for example circuit breaker. The control system 6 can also identify the operation status of the wind farm including the power supplied by the generator of the wind turbines selected as the first wind turbine, reactive power absorbed by converter of the wind turbines, and reactive power induced by the at least one cable 50, 51, 52, and the power supplied by the external generator 9.

In contrast to protection for wind farm in normal condition where the fault current is normally predetermined in consideration of the capacity of the utility grid because the value for the fault current at the faulted zone is predominately influenced by the short circuit capacity of the utility grid which is over hundreds of times greater than the short circuit capacity of the activated wind turbine, the protection for wind farm in islanding mode where the utility grid is disconnected from the wind farm needs to consider the present configuration of the wind farm and operation of its components (for example the activated wind turbine, the deactivate wind turbine, the external generator if any) to set the fault current threshold for tripping off the faulted zone. For example, in normal condition when the wind farm is connected to the utility grid, the fault current flowing into a wind turbine can be as high as tens of kilo-ampere when a fault occurs within this wind turbine; however in islanding mode when the utility grid is disconnected from the wind farm, the fault current flowing into failed wind turbine can be less than one kilo-ampere provided by other activated wind turbines. That means, the threshold setting for overcurrent protection scheme must be adapted to the configuration of the wind farm and operation of its components in islanding mode to ensure reliability and sensitivity. In particular, if both of principles of differential current protection and the overcurrent protection are adopted for the protection system for the same wind turbine of the wind farm, the differential current protection can be applied prior to the overcurrent protection because the former is an absolute fault judgement criterion and does not need to consider influence outside of the faulted zone. And the threshold setting of overcurrent protection needs to be adapted to the configuration of the wind farm and operation of its components affected by the different protection. The control system 6 can read the first set of vectors for the current from the first measuring unit M1, the second measuring unit M2, and the third measuring unit M3, and judge the first fault F1 by using the differential current criterion (principle for differential current protection) in consideration of the first set of current vectors. In particular, when the first fault F1 occurs, the magnitude of the summation of the current vectors measured from M1, M2 and M3, which can be named as the differential current, will exceed a threshold. In this case, the differential current is sufficient to identify the first fault F1, based on which the control system 6 can operate the relative switches to isolate the first fault F1. For example, if the first fault was detected in the first wind turbine 22, the control system 6 can control to adapt configuration of the wind farm 1 by opening its second switch 224 and its third switch 812 of the first wind turbine 22; otherwise control to adapt the configuration of the wind farm 1 by maintaining the current configuration of the wind farm 1. The transformer unit 223 of the first wind turbine 22 is electrically isolated from the wind farm 1 and thus is protected from any short circuit current injecting to its winding circuits. As another example for a wind turbine 10 except for the first wind turbine, if the first fault was detected in the wind turbine 10, the control system 6 can control to adapt configuration of the wind farm 1 by opening its third switch 800 of the wind turbine 10; otherwise control to adapt the configuration of the wind farm 1 by maintaining the current configuration of the wind farm 1. The transformer unit 103 of the first wind turbine 10 is electrically isolated from the wind farm 1 and thus is protected from any short circuit current injected to its winding circuits.

The operation status and the adapted configuration of wind farm 1 are considered for part of the factors influencing the judgement of the second fault F2 using principle of overcurrent protection. For each of the plurality of wind turbines free of the first fault F1, the control system can judge the second fault in consideration of operation status and the adapted configuration of the wind farm at the present time, and the value for the current flowing at the electrical connection extending from its transformer unit to its generator, and further adapting the configuration of the wind farm by: opening the electrical connection extending from the second winding circuit of its transformer unit to its generator if the second fault was detected, otherwise maintaining the adapted configuration of the wind farm.

The wind farm operation status is reflected by power generated by the generator of another wind turbine also selected as the first wind turbine, the reactive power absorbed by the converter of another wind turbine which is also electrically connected to the cable, the reactive power induced by the at least one cable, and the power supplied by an external generator if the external generator is connected in the wind farm; the wind farm configuration is reflected by the on/off state of the first switch 101-151, 201-251, 301-351, the second switch 104-154, 204-254, 304-354, the third switch 800-805, 810-815, 820-825, the sixth switch 106-156, 206-256, 306-356, and the fifth switch 2.

Taking wind turbine 22 (the first wind turbine) for example, if it is free of the first fault F1, the control system 6 can judge the second fault F2 of the first wind turbine 22 in consideration of operation status and the adapted configuration of the wind farm 1 at the present time, and the value for the current flowing at the electrical connection extending from its transformer unit 812 to its generator 220 (for example, the value for the current flowing at the second switch 224). In particular, where there is the second fault F2 with the first wind turbine 22, the value for the current flowing at the electrical connection extending from its transformer unit 223 to its generator 220 is influenced by the operation status and configuration of the wind farm.

For the judgement of the second fault F2 of the one of the plurality of wind turbines 10-15, 20-25, 30-35, the control system 6 is adapted for reading a first current vector from the second measuring unit M2, calculating a first threshold based on the operation status and the adapted configuration of the wind farm, comparing the magnitude of the first current vector with the first threshold, and detecting the second fault F2 if the first value exceeds the first threshold and the direction of the first current vector is flowing from the second winding of the transformer unit to the generator of the wind turbine. The control system 6 can control to further adapt the configuration of the wind farm 1 by: opening the second switch 224 of the first wind turbine 22 if the second fault was detected in it, otherwise maintaining the configuration of the wind farm 1.

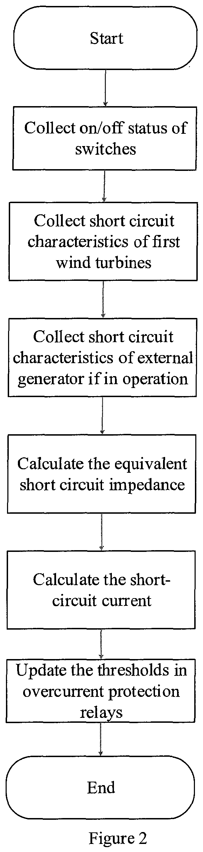

Figure 2 shows a flowchart for calculating the overcurrent threshold according to an embodiment of present invention. Firstly, the on/off status of the switches will be collected; secondly, the short circuit characteristics of the power sources, including first wind turbines and the external generator (if connected), will be collected as well; thirdly, the equivalent short circuit impedance of the islanding system will be calculated; fourthly, the short-circuit current will be calculated by using the power source short circuit characteristics and the equivalent short circuit impedance; finally, update the thresholds for overcurrent protection relay.

Assuming that the current wind farm configuration is defined in the table below, where wind turbine 11 and 22 are selected as the first wind turbine, other sixteen wind turbines 10, 12-15, 20-21, 23-25, 30-35 are deactivated:

| Wind farm configuration | Closed switch | Open switch |
|---|---|---|
| First switch | 104-154, 204-254, 304-354 | |
| Second switch | 114, 224 | 104, 124-154, 204-214, 234-254, 304-354 |
| Third switch | 800-805, 810-815, 820-825 | |
| Sixth switch | 116, 226 | 106, 126-156, 206-216, 236-256, 306-356 |
| Fifth switch | | 2 |

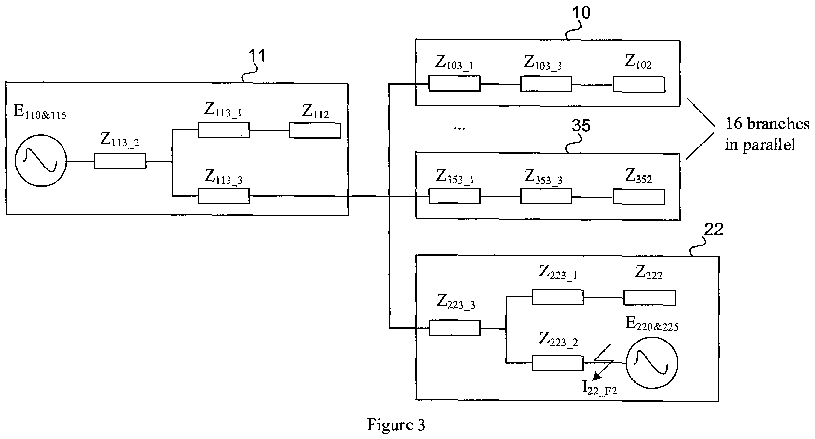

Figure 3 shows an equivalent circuit of the system according to an embodiment of present invention. As shown in figure 3, when a second fault occurs in wind turbine 22, the equivalent circuit of the system can be obtained, where E_{110&115} is the voltage provided by the generator 110 and converter 115 of wind turbine 11; Z_{113_1}, Z_{113_2} and Z_{113_3} are the impedance of the first winding circuit, second winding circuit and third wind circuit of transformer 113; Z₁₁₂ is the impedance of auxiliary equipment 112; Z_{103_1} and Z_{103_3} to Z_{353_1} and Z_{353_3} are the impedance of the first winding circuit and third winding circuit of transformer 103 to transformer 353 of the total sixteen deactivated wind turbines; Z₁₀₂ to Z₃₅₂ are the impedance of the auxiliary equipment 102 to auxiliary equipment 352 of the total sixteen deactivated wind turbines; Z_{223_1}, Z_{223_2}, Z_{223_3} are the impedance of the first winding circuit, second wind circuit and third winding circuit of transformer 223; Z222 is the impedance of the auxiliary equipment 222; E_{220&225} is the voltage provided by the generator 220 and converter 225 of wind turbine 22; I_{22_F2} is the short circuit current measured by measuring unit M2 during the second fault in wind turbine 22.

Assume the fault type is a three phase short circuit fault, the voltage at the fault point can be regarded as zero. The equivalent short circuit impedance can be calculated based on basic series and parallel circuit principles, and the short circuit current I_{22_F2} can be then by using voltage source E_{110&115} and equivalent short circuit impedance. The detailed procedures of series and parallel circuit calculation are well defined in prior art and will not repeated here. With the short circuit current I_{22_F2}, the threshold for overcurrent protection for the second fault F2 can be set by multiplying a reliability factor required by the protection relay.

Where the second fault F2 fault occurs while the first fault F1 does not occur, the value for the magnitude of the current flowing at the second switch exceeds the first threshold and the differential current involving the first fault F1 does not exceed its threshold. Thus, the second fault F2 can be distinguished from the first fault F1.

As another example by the wind turbine 10 (not selected as the first wind turbine), the judgement of the second fault F2 can be disabled because the second switch 104 and the sixth switch 106 will be open.

As for each of the wind turbines, by detecting the first fault F1 followed by detecting the second fault F2, the protection system is rendered more efficient than vice versa or in parallel because the wind farm configuration does not affect the outcome of the detection of the first fault by applying the principle of differential current protection, however the detection of the second fault by applying the principle of the overcurrent protection needs consideration of the wind farm configuration; in addition, the protection action for the first fault can also protect potential second fault F2 by opening the second switch and the third switch.

As alternative, both the diesel generator 9 and the wind turbine 10-15, 20-25, 30-35 can be started up to supply the auxiliary loads of the wind turbines 10-15, 20-25, 30-35 in the wind farm 1 during islanding operation caused by utility grid failure. The wind farm 1 has the external generator 9 electrically connectable to the bus bar 8 to supply power to the auxiliary equipment of the plurality of the wind turbines. For example, after formation of the islanded wind farm 1, besides the first wind turbine 22, the control system 6 selects the respective diesel generator 9 as the power source to the auxiliary equipment of the wind turbines. As soon as the diesel generator 9 is in operation, the control system 6 can send command to close the fifth switch 2 between the diesel generator 9 and the respective cable 50, 51, 52. After that, the control system 6 controls the third switch 800-805, 810-815, 820-825 to be closed and power generated by the diesel generator 9 flows through the cable 50, 51, 52. The power flowing through the cable 50, 51, 52 is supplied to the auxiliary equipment 102-152, 202-252, 302-352 of the respective wind turbines 10-15, 20-25, 30-35. The operation of supplying auxiliary load by the diesel generator 9 and by the activated wind turbine can be coordinated by the control system 6 and thus the load for auxiliary equipment of the wind turbines is cooperatively supported by the external generator and the selected wind turbine. Thus, when judging the first fault F1 and the second fault in the wind turbines 10-15, 20-25, 30-35, the operation status of the wind farm further includes power supplied by the external generator.

As shown in figure 1, the protection system further includes: at least one fourth switch S41, S42, S43, S44, S45, S46, S47, S48, being respectively arranged to electrically connect adjacent wind turbine groups G1-G8 via the cable 50, 51, 52. For example, group G1 consists of the wind turbines 10-11 is electrically adjacent to group G2 consisting of wind turbines 12, 13, group G4 consisting of wind turbines 20, 21, 22 and group G7 consisting of wind turbines 30-33. The fourth switches S41, S44 and S47 electrically connects the group G1 and the group G4, G7, the other fourth switch 42 electrically connects the group G1 and the group G2; from another example, group G3 consisting of wind turbines 14, 15 is electrically adjacent to group G2 consisting of wind turbines 12, 13 and thus a fourth switch S43 electrically connects it to group G2. The protection system further includes at least one fourth measuring unit M41, M42, M43, M44, M45, M46, M47, M48, as for each of the groups G1-G8 of wind turbines, being adapted for respectively measuring a second set of current vectors 141-148 flowing at respective one of the at least one fourth switches S41-S48 electrically connected to the wind turbine group. For example, the fourth measuring units M41 is adapted for sampling into a second set of current vector 141 for the current flowing at the fourth switch S41, and the measuring unit M43 is adapted for sampling into a second set of current vector 143 for the current flowing at the fourth switch S43, and so can they be for the other fourth switches. The control system 6 is further adapted for, as for each of the groups G1-G8 of wind turbines, judging a third fault F3 in consideration of the current respectively flowing via its third switch and the second set of current vectors by using differential current criterion, and if the third fault was detected controlling to adapt the configuration of the wind farm: by opening the corresponding one of the at least one fourth switch and/or third switch to electrically disconnect from the first wind turbines and the external generator if put into operation, otherwise maintaining the configuration of the wind farm 1. The third fault is concerned with the cable 50, 51, 52 that is electrically connected to wind turbine group G1-G8.

In normal operation, for each of the wind turbine group G1-G8, the magnitude of differential current concerning its second set of current vectors and the vector for the current flowing via its third switch is below the threshold. For example, as for group G1, the magnitude of differential current for the second set of values for currents 141 and 142 flowing at the fourth switches S41 and S42, and that flowing at the third switches 800 and 801 is below the threshold; as another example, as for group G3, the magnitude of differential current for the second set of value for current 143 flowing at the fourth switch S43 and that flowing at the third switches 804, 805 is below the threshold. So are they for the other wind turbine groups. When the third fault occurs, the magnitude of different current will exceed the threshold. In this case, the control system 6 will control to open the third switch and the fourth switch relevant to the wind turbine to cut off the potential short circuit current sources. For example, if wind turbine 11 and wind turbine 22 are selected as the first wind turbine, and external generator 9 is disconnected. If the third fault F3 was detected in the portion of cable 50 electrically connected to wind turbine group G1, the control system 6 will control to open the third switches 801 and the fourth switches S41 to disconnect fault point with the first wind turbine 11 and 22; as another example, if the third fault F3 was detected in the portion of cable 50 electrically connected to wind turbine group G3, the control system 6 will control to open the fourth switches S43 to disconnect the fault point with the first wind turbine 11 and 22.

A fourth fault F4 may occur if there is a short circuit to the bus bar 8, to which the principle of differential current protection is applied and the configuration of the wind farm 1 will be adapted accordingly in particular changing or maintaining the on/off status of the switches for cutting off the short circuit source. The wind turbines are arranged in a multiple of sets and the wind turbines in the same set are electrically connected to the respective one of the plurality of cables. For example, as shown in figure 1, the wind turbines 10-15, 20-25, 30-35 are arranged in three sets E1, E2, E3 which respectively consists of the wind turbines 10-15, the wind turbines 20-25, and the wind turbines 30-35; the wind turbines 10-15 of the wind turbine set E1 is electrically connected to the cable 50, the wind turbines 20-25 of the wind turbine set E2 is electrically connected to the cable 51, and the wind turbines 30-35 of the wind turbine set E3 is electrically connected to the cable 52. The protection system further comprises a fifth measuring unit M5, being adapted for measuring a third set of current vectors flowing in and out of the bus bar 8. For example, in order to detect and locate the fourth fault F4, the fifth measuring unit M5 can sample into the third set of current vectors flowing at the fourth switches S41, S44, S47 that are respectively arranged between the bus bar 8 and any of the wind turbine sets E1, E2, E3. If an external generator 9 supplies the power during the islanding mode, the fifth measuring unit M5 can measures an additional third set of current vector flowing at the fifth switch 2 that is arranged between the bus bar 8 and the external generator 9. The control system 6 is further adapted for judging the fourth fault F4 in consideration of the third set of current vectors by using differential current criterion, and if the fourth fault was detected controlling to adapt the configuration of the wind farm by opening the fourth switches electrically closest to the bus bar and connecting the bus bar to the first wind turbines, and the fifth switch if the external generator is in operation, otherwise maintaining the current configuration of the wind farm. Assuming wind turbine 11 and wind turbine 22 are selected as the first wind turbine, and the external generator 9 is in operation. In normal operation, the magnitude of differential current of the third set of current vectors, and diesel generator branch current vector is below threshold. When the fourth fault F4 occurs, the magnitude of the different current will exceed the threshold. In this case, the control system 6 controls to open the fourth switches S41, S44, and the fifth switch 2 to cut off the short circuit current sources from the bus bar 8.

A fifth fault F5 may occur where there is short circuit to the electrical connection between the fifth switch 2 and the external generator 9. The protection system further comprises a sixth measuring unit M6, being adapted for measuring a second current vector flowing at the fifth switch 2. The control system 6 is further adapted for judging the fifth fault F5 using principle of overcurrent protection in consideration of operation status and the configuration of the wind farm 1, the second current vector, and controlling to adapt the configuration of the wind farm by opening the fifth switch 2 if the fifth fault F5 was detected, otherwise maintaining the configuration of the wind farm 1. The threshold used for detection of the fifth fault F5 can be determined in consideration of the operation status and the configuration of the wind farm 1, the magnitude and direction of the second current vector at the present time of fault detection.

Assuming that the current wind farm configuration is defined as listed in the table below, where wind turbine 11 and 22 are selected as the first wind turbine, other sixteen wind turbines 10, 12-15, 20-21, 23-25, 30-35 are deactivated, external generator 9 is put into operation:

| Wind farm configuration | Closed switch | Open switch |
|---|---|---|
| First switch | 104-154, 204-254, 304-354 | |
| Second switch | 114, 224 | 104, 124-154, 204-214, 234-254, 304-354 |
| Third switch | 800-805, 810-815, 820-825 | |
| Fourth switch | S41, S42, S43, S44, S45, S46, S47, S48 | |
| Sixth switch | 116, 226 | 106, 126-156, 206-216, 236-256, 306-356 |
| Fifth switch | 2 | |

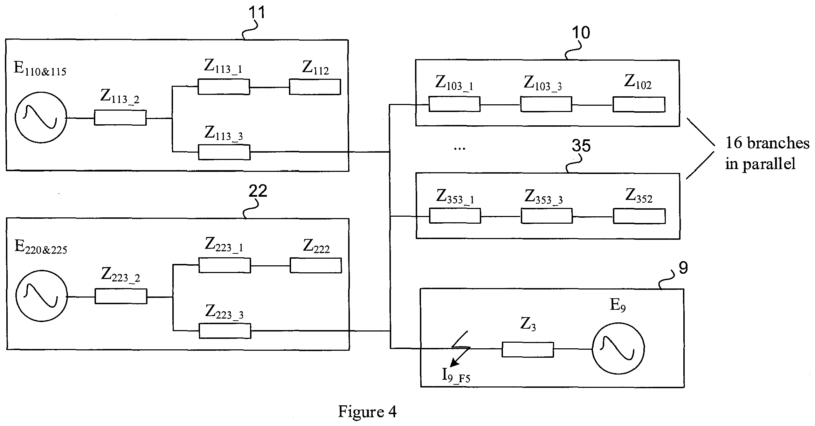

Figure 4 shows an equivalent circuit of the system according to an embodiment of present invention. As shown in figure 4, when a fifth fault occurs in external generator 9, the equivalent circuit of the system can be obtained, where E₉ is the voltage provided by the external generator 9; Z₃ is the impedance of the transformer 3; I_{9_F5} is the short circuit current measured by measuring unit M5 during the fifth fault in external generator 9; other definitions are the same as figure 3.

Assume the fault type is a three phase short circuit fault, the voltage at the fault point can be regarded as zero. The equivalent short circuit impedance can be calculated based on basic series and parallel circuit principles, and the short circuit current I_{9_F5} can be then by using voltage source E_{110&115}, E_{220&225} and equivalent short circuit impedance. The detailed procedures of series and parallel circuit calculation are well defined in prior art and will not repeated here. With the short circuit current I_{9_F5}, the threshold for overcurrent protection for the fifth fault F5 can be set by multiplying a reliability factor required by the protection relay.

A sixth fault F6 may occur where there is short circuit to the electrical connection from the first switch 101-151, 201-251, 301-351 of each of the wind turbines 10-15, 20-25, 30-35 to the auxiliary equipment 102-152, 202-252, 302-352 or the auxiliary equipment itself. The control system 6 is further adapted for reading a third current vector from the first measuring unit M1, judging the sixth fault F6 using principle of overcurrent protection in consideration of the operation status and the configuration of the wind farm, and the third current vector, and controlling to adapt the configuration of the wind farm by opening the first switch if the sixth fault was detected, otherwise maintaining the configuration of the wind farm. The threshold used for detection of the sixth fault F6 can be determined in consideration of the operation status and the configuration of the wind farm 1, the magnitude and direction of the first value at the present time of fault detection.

Assuming that the current wind farm configuration is the same as what discussed for the fifth fault, where wind turbine 11 and 22 are selected as the first wind turbine, other sixteen wind turbines 10, 12-15, 20-21, 23-25, 30-35 are deactivated, external generator 9 is put into operation.

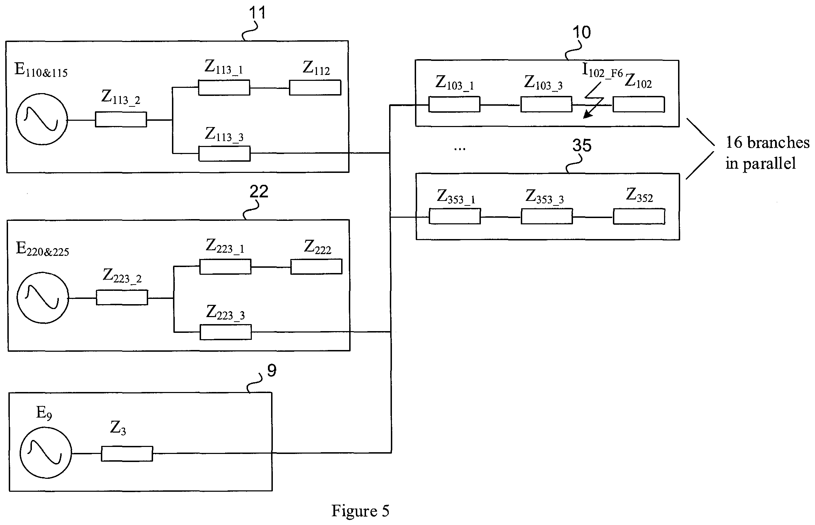

Figure 5 shows an equivalent circuit of the system according to an embodiment of present invention. As shown in figure 5, when a sixth fault occurs in auxiliary equipment 102 of wind turbine 10, the equivalent circuit of the system can be obtained, where I_{102_F6} is the short circuit current measured by measuring unit M1 during the sixth fault in auxiliary equipment 102; other definitions are the same as figure 4.

Assume the fault type is a three phase short circuit fault, the voltage at the fault point can be regarded as zero. The equivalent short circuit impedance can be calculated based on basic series and parallel circuit principles, and the short circuit current I_{102_F6} can be then by using voltage source E_{110&115}, E_{220&225}, E₉ and equivalent short circuit impedance. The detailed procedures of series and parallel circuit calculation are well defined in prior art and will not repeated here. With the short circuit current I_{102_F6}, the threshold for overcurrent protection for the sixth fault F6 can be set by multiplying a reliability factor required by the protection relay.

## Claims

1. A protection method for a wind farm (1) disconnected to a utility grid, wherein the wind farm (1) comprises a plurality of wind turbines (10-15, 20-25, 30-35), and each of the wind turbine (10-15, 20-25, 30-35) comprises auxiliary equipment (102-152, 202-252, 302-352), a transformer unit (103-153, 203-253, 303-353) and a generator (100-150, 200-250, 300-350), the transformer unit has a first winding circuit electrically connectable to an input of the auxiliary equipment (102-152, 202-252, 302-352), a second winding circuit electrically connectable to an output of the generator via a converter (105-155, 205-255, 305-355), a third winding circuit electrically connectable to the a respective one of at least one cable (50-52);
the protection method comprising:
connecting the auxiliary equipment (102-152, 202-252, 302-352) of the plurality of wind turbines (10-15, 20-25, 30-35) electrically to the first winding circuit of the transformer unit (103-153, 203-253, 303-353) of the respective one of the plurality of wind turbines (10-15, 20-25, 30-35);
connecting the third winding circuit of the respective one of the plurality of wind turbines (10-15, 20-25, 30-35) electrically to the respective one of the at least one cable (50-52);
selecting a first wind turbine (10-15, 20-25, 30-35) of the plurality of wind turbines (10-15, 20-25, 30-35);
connecting the generator (100-150, 200-250, 300-350) of the first wind turbine (10-15, 20-25, 30-35) electrically to the second winding circuit of the transformer unit (103-153, 203-253, 303-353) of the first wind turbine (10-15, 20-25, 30-35) for supplying power to the auxiliary equipment (102-152, 202-252, 302-352) of the first wind turbine (10-15, 20-25, 30-35) via the transformer unit (103-153, 203-253, 303-353) of the first wind turbine (10-15, 20-25, 30-35);
supplying power with the generator (100-150, 200-250, 300-350) of the first wind turbine (10-15, 20-25, 30-35) to the auxiliary equipment (102-152, 202-252, 302-352) of other wind turbines (10-15, 20-25, 30-35) via the transformer unit (103-153, 203-253, 303-353) of the first wind turbine (10-15, 20-25, 30-35), the respective one of the at least one cable (50-52) connecting the first wind turbine (10-15, 20-25, 30-35) and the other wind turbines (10-15, 20-25, 30-35), and the transformer unit (103-153, 203-253, 303-353) of the other wind turbines (10-15, 20-25, 30-35);
measuring, for each of the plurality of wind turbines (10-15, 20-25, 30-35), a first set of current vectors flowing at the electrical connection extending from the transformer unit (103-153, 203-253, 303-353) to the auxiliary equipment (102-152, 202-252, 302-352), from the transformer unit (103-153, 203-253, 303-353) to the generator (100-150, 200-250, 300-350), and from the transformer unit (103-153, 203-253, 303-353) to the cable (50-52), detecting a first fault in consideration of the first set of current vectors by using differential current criterion, and adapting the configuration of the wind farm (1): by disconnecting the electrical connection extending from the second winding circuit of the transformer unit (103-153, 203-253, 303-353) to the output of the generator (100-150, 200-250, 300-350) and the electrical connection extending from the third winding circuit of the transformer unit (103-153, 203-253, 303-353) to the cable (50-52) if the first fault was detected, otherwise maintaining the configuration of the wind farm (1); and
detecting, for each of the plurality of wind turbines (10-15, 20-25, 30-35) free of the first fault, a second fault in consideration of the operation status and the adapted configuration of the wind farm (1), and the first current vector flowing at the electrical connection extending from the transformer unit (103-153, 203-253, 303-353) to the generator (100-150, 200-250, 300-350), and further adapting the configuration of the wind farm (1) by: opening the electrical connection extending from the second winding circuit of the transformer unit (103-153, 203-253, 303-353) to the generator (100-150, 200-250, 300-350) if the second fault was detected, otherwise maintaining the adapted configuration of the wind farm (1).

2. The protection method according to claim 1, further comprising:
calculating, for the detection of the second fault of the one of the plurality of the first wind turbines (10-15, 20-25, 30-35), a first threshold based on the operation status and the adapted configuration of the wind farm (1), comparing the magnitude of the first current vector flowing at the electrical connection extending from the transformer unit (103-153, 203-253, 303-353) to the generator (100-150, 200-250, 300-350) with the first threshold, and determining the second fault if the magnitude of the first current vector exceeds the first threshold and the direction of the first current vector is flowing from the second winding circuit of the transformer unit (103-153, 203-253, 303-353) to the generator (100-150, 200-250, 300-350) of the wind turbine (10-15, 20-25, 30-35).

3. The protection method according to claim 1 or 2, further comprising:
including, in the operation status of the wind farm (1), the power supplied by the generator (100-150, 200-250, 300-350) of another wind turbine (10-15, 20-25, 30-35), the reactive power absorbed by the converter (105-155, 205-255, 305-355) of another wind turbine (10-15, 20-25, 30-35), and the reactive power induced by the at least one cable (50-52).

4. The protection method according to claim 3, further comprising:
providing, to the wind farm (1), an external generator (9) electrically connectable to a bus bar (8) in order to supply power to the auxiliary equipment (102-152, 202-252, 302-352) of the plurality of the wind turbines (10-15, 20-25, 30-35); and
including, in the operation status of the wind farm (1), the power supplied by the external generator (9).

5. The protection method according to any of preceding claims, wherein the plurality of wind turbines (10-15, 20-25, 30-35) are arranged in a multiple of groups (G1-G8), each including at least one wind turbine (10-15, 20-25, 30-35),
the protection method further comprising:
measuring, for each of the groups (G1-G8) of wind turbines (10-15, 20-25, 30-35), a second set of current vectors flowing to the wind turbine group (G1-G8) via the cable (50-52), detecting a third fault in consideration of the current vector respectively flowing at the electrical connection point between the third winding circuit of the transformer unit (103-153, 203-253, 303-353) of the respective wind turbine (10-15, 20-25, 30-35) in the wind turbine group (G1-G8) and the cable (50-52), and the second set of current vectors by using differential fault criterion, and adapting the configuration of the wind farm (1) by disconnecting the electrical connection to the first wind turbine (10-15, 20-25, 30-35) if the third fault was detected, otherwise maintaining the configuration of the wind farm (1).

6. The protection method according to any of preceding claims, wherein: the wind farm (1) has a plurality of cables (50-52) and a bus bar (8) electrically connecting the plurality of cables (50-52), the plurality of wind turbines (10-15, 20-25, 30-35) are arranged in multiple sets, and the wind turbines (10-15, 20-25, 30-35) in the same set are electrically connectable to a respective one of the plurality of cables (50-52);
the protection method further comprising:
measuring a third set of current vectors flowing in and out of the bus bar (8), detecting a fourth fault in consideration of the third set of current vectors by using differential current criterion, and adapting the configuration of the wind farm (1) by disconnecting the electrical connection of the bus bar (8) to the first wind turbines (10-15, 20-25, 30-35) if the fourth fault was detected, otherwise maintaining the current configuration of the wind farm (1).

7. The protection method according to claim 6, wherein: the wind farm (1) has an external generator (9) electrically connectable to the bus bar (8) to supply power to the auxiliary equipment (102-152, 202-252, 302-352) of the plurality of the wind turbines (10-15, 20-25, 30-35);
the protection method further comprising:
measuring a second current vector flowing in the electrical connection extending from the bus bar (8) to the external generator (9);
detecting a fifth fault in consideration of operation status and the configuration of the wind farm (1), and the second current vector; and
adapting the configuration of the wind farm (1) by disconnecting the external generator (9) if the fifth fault was detected, otherwise maintaining the configuration of the wind farm (1).

8. The protection method according to any of preceding claims, further comprising:
measuring, for each of the plurality of wind turbines (10-15, 20-25, 30-35), a third current vector flowing in the electrical connection extending from the first winding circuit of the transformer unit (103-153, 203-253, 303-353) to the auxiliary equipment (102-152, 202-252, 302-352), detecting a sixth fault in consideration of the operation status and the configuration of the wind farm (1), and the third current vector, and adapting the configuration of the wind farm (1) by disconnecting the auxiliary equipment (102-152, 202-252, 302-352) if the sixth fault was detected, otherwise maintaining the configuration of the wind farm (1).

9. A protection system for a wind farm disconnected to a utility grid, wherein the wind farm comprises a plurality of wind turbines (10-15, 20-25, 30-35), and each of the wind turbine (10-15, 20-25, 30-35) comprises auxiliary equipment (102-152, 202-252, 302-352), a transformer unit (103-153, 203-253, 303-353) and a generator (100-150, 200-250, 300-350), the transformer unit (103-153, 203-253, 303-353) has a first winding circuit electrically connected to an input of the auxiliary equipment (102-152, 202-252, 302-352) via a first switch (101,-151, 210-251, 301-351), a second winding circuit electrically connected to an output of the generator (100-150, 200-250, 300-350) via a converter (105-155, 205-255, 305-355) and a second switch (104-154, 204-254, 304-354), a third winding circuit electrically connected to the respective one of at least one cable (50-52) via a third switch (800-805, 810-815, 820-825);
the protection system comprising, for each of the plurality of wind turbines (10-15, 20-25, 30-35):
a first measuring unit (M1), a second measuring unit (M2), a third measuring unit (M3), being adapted for respectively measuring a first set of current vectors flowing at the first switch (101,-151, 210-251, 301-351), the second switch (104-154, 204-254, 304-354), and the third switch (800-805, 810-815, 820-825); and
a control system (6), being adapted for:
controlling to close the first switch (101,-151, 210-251, 301-351) and the third switch (800-805, 810-815, 820-825) of the plurality of wind turbines (10-15, 20-25, 30-35);
selecting a first wind turbine (10-15, 20-25, 30-35) of the plurality of wind turbines (10-15, 20-25, 30-35),
controlling the generator (100-150, 200-250, 300-350) of the first wind turbine (10-15, 20-25, 30-35) to supply power to the auxiliary equipment (102-152, 202-252, 302-352) of the first wind turbine (10-15, 20-25, 30-35) and supplying power to the auxiliary equipment (102-152, 202-252, 302-352) of other wind turbines (10-15, 20-25, 30-35) by closing the second switch (104-154, 204-254, 304-354),
detecting a first fault of one of the plurality of wind turbines (10-15, 20-25, 30-35) in consideration of the first set of current vectors by using a differential current criterion,
controlling to adapt the configuration of the wind farm (1) by: opening the second (104-154, 204-254, 304-354) and the third switch (800-805, 810-815, 820-825) of the wind turbine (10-15, 20-25, 30-35) if the first fault was detected, otherwise maintaining the configuration of the wind farm (1);
detecting a second fault of the first wind turbine (10-15, 20-25, 30-35) free of the first fault in consideration of the operation status and the adapted configuration of the wind farm (1), and the first current vector flowing at the second switch (104-154, 204-254, 304-354), and controlling to further adapt the configuration of the wind farm (1) by: opening the second switch (104-154, 204-254, 304-354) of the first wind turbine (10-15, 20-25, 30-35) if the second fault was detected, otherwise maintaining the adapted configuration of the wind farm (1).

10. The protection system according to claim 9, wherein:
the second fault of one of the first wind turbines (10-15, 20-25, 30-35) is detected by calculating a first threshold based on the operation status and the adapted configuration of the wind farm (1), comparing the magnitude of the first current vector flowing at the second switch (104-154, 204-254, 304-354) with the first threshold, and indicating the second fault if the magnitude of the first current vector exceeds the first threshold and the direction of the first current vector is flowing from the second winding of the transformer unit (103-153, 203-253, 303-353) to the generator (100-150, 200-250, 300-350) of the wind turbine (10-15, 20-25, 30-35).

11. The protection system according to claim 9 or 10, wherein:
the operation status of the wind farm (1) includes the power supplied by the generator (100-150, 200-250, 300-350) of other wind turbines (10-15, 20-25, 30-35), reactive power absorbed by the converter (105-155, 205-255, 305-355) of other wind turbines (10-15, 20-25, 30-35), and reactive power induced by the at least one cable (50-52).

12. The protection system according to claim 11, wherein:
the wind farm has an external generator (9) electrically connectable to a bus bar (8) to supply power to the auxiliary equipment (102-152, 202-252, 302-352) of the plurality of the wind turbines (10-15, 20-25, 30-35); and
the operation status of the wind farm (1) further includes power supplied by the external generator (9).

13. The protection system according to any of preceding claims, wherein the plurality of wind turbines (10-15, 20-25, 30-35) are arranged in multiple groups (G1-G8), each group (G1-G8) including at least one wind turbine (10-15, 20-25, 30-35) which is electrically connected to the respective one of the at least one cable (50-52) via the third switch (800-805, 810-815, 820-825);
the protection system further includes:
at least one fourth switch (S41-S48), being respectively arranged to electrically connect adjacent wind turbine groups (G1-G8) via the cable (50-52); and
at least one fourth measuring unit (M4), for each of the groups (G1-G8) of wind turbines (10-15, 20-25, 30-35), being adapted for respectively measuring a second set of current vectors for the respective one of the at least one fourth switches (S41-S48) electrically connected to the wind turbine group (G1-G8);
wherein:
the control system (6) is further adapted to detect, for each of the groups (G1-G8) of wind turbines (10-15, 20-25, 30-35), a third fault in consideration of the second set of current vectors and the current respectively flowing via the third switch (800-805, 810-815, 820-825) by using a differential current criterion, and if the third fault was detected controlling to adapt the configuration of the wind farm (1) by opening the corresponding one of the at least one fourth switch (S41-S48) and/or the third switch (800-805, 810-815, 820-825), otherwise maintaining the configuration of the wind farm (1).

14. The protection system according to any of preceding claims, wherein: the wind farm (1) has a plurality of cables (50-52) and a bus bar (8) electrically connecting the plurality of cables (50-52), the plurality of wind turbines (10-15, 20-25, 30-35) are arranged in a multiple of sets, and the wind turbines (10-15, 20-25, 30-35) in the same set are electrically connected to the respective one of the plurality of cables (50-52),
the protection system further comprising:
a fifth measuring unit (M5), being adapted for measuring a third set of current vectors flowing in and out of the bus bar (8);
the control system (6) further being adapted for detecting a fourth fault in consideration of the third set of current vectors by using a differential current criterion, and if the fourth fault was detected, controlling to adapt the configuration of the wind farm (1) by opening the fourth switches (S41-S48) electrically closest to the bus bar (8) and connecting the bus bar (8) to the first wind turbines (10-15, 20-25, 30-35), otherwise maintaining the current configuration of the wind farm (1).

15. The protection system according to claim 14, wherein: the wind farm (1) has an external generator (9) electrically connected to the bus bar (8) via a fifth switch (2) to supply power to the auxiliary equipment (102-152, 202-252, 302-352) of the plurality of the wind turbines (10-15, 20-25, 30-35);
the protection system further comprising:
a sixth measuring unit (M6), being adapted for measuring a second current vector flowing in the electrical connection extending from the fifth switch (2) to the external generator (9);
the control system (6) further being adapted for detecting a fifth fault in consideration of the operation status and the configuration of the wind farm (1), and the second current vector, and controlling to adapt the configuration of the wind farm (1) by opening the fifth switch (2) if the fifth fault was detected, otherwise maintaining the configuration of the wind farm (1).

## Patentansprüche

1. Schutzverfahren für einen Windpark (1), der von einem Versorgungsnetz getrennt ist, wobei der Windpark (1) mehrere Windkraftanlagen (10 bis 15, 20 bis 25, 30 bis 35) umfasst und jede Windkraftanlage (10 bis 15, 20 bis 25, 30 bis 35) Hilfsausrüstung (102 bis 152, 202 bis 252, 302 bis 352), eine Transformatoreinheit (103 bis 153, 203 bis 253, 303 bis 353) und einen Generator (100 bis 150, 200 bis 250, 300 bis 350) umfasst, wobei die Transformatoreinheit einen ersten Wicklungskreis aufweist, der elektrisch mit einem Eingang der Hilfsausrüstung (102 bis 152, 202 bis 252, 302 bis 352) verbindbar ist, einen zweiten Wicklungskreis, der über einen Umrichter (105 bis 155, 205 bis 255, 305 bis 355) elektrisch mit einem Ausgang des Generators verbindbar ist, einen dritten Wicklungskreis, der elektrisch mit dem jeweiligen des mindestens einen Kabels (50 bis 52) verbindbar ist;
wobei das Schutzverfahren Folgendes umfasst:
elektrisches Verbinden der Hilfsausrüstung (102 bis 152, 202 bis 252, 302 bis 352) der mehreren Windkraftanlagen (10 bis 15, 20 bis 25, 30 bis 35) mit dem ersten Wicklungskreis der Transformatoreinheit (103 bis 153, 203 bis 253, 303 bis 353) der jeweils einen der mehreren Windkraftanlagen (10 bis 15, 20 bis 25, 30 bis 35);
elektrisches Verbinden des dritten Wicklungskreises der jeweils einen der mehreren Windkraftanlagen (10 bis 15, 20 bis 25, 30 bis 35) mit dem jeweils einen des mindestens einen Kabels (50 bis 52);
Auswählen einer ersten Windkraftanlage (10 bis 15, 20 bis 25, 30 bis 35) unter den mehreren Windkraftanlagen (10 bis 15, 20 bis 25, 30 bis 35);
elektrisches Verbinden des Generators (100 bis 150, 200 bis 250, 300 bis 350) der ersten Windkraftanlage (10 bis 15, 20 bis 25, 30 bis 35) mit dem zweiten Wicklungskreis der Transformatoreinheit (103 bis 153, 203 bis 253, 303 bis 353) der ersten Windkraftanlage (10 bis 15, 20 bis 25, 30 bis 35) zur Energieversorgung der Hilfsausrüstung (102 bis 152, 202 bis 252, 302 bis 352) der ersten Windkraftanlage (10 bis 15, 20 bis 25, 30 bis 35) über die Transformatoreinheit (103 bis 153, 203 bis 253, 303 bis 353) der ersten Windkraftanlage (10 bis 15, 20 bis 25, 30 bis 35);
Zuführen von Energie mit dem Generator (100 bis 150, 200 bis 250, 300 bis 350) der ersten Windkraftanlage (10 bis 15, 20 bis 25, 30 bis 35) zur Hilfsausrüstung (102 bis 152, 202 bis 252, 302 bis 352) anderer Windkraftanlagen (10 bis 15, 20 bis 25, 30 bis 35) über die Transformatoreinheit (103 bis 153, 203 bis 253, 303 bis 353) der ersten Windkraftanlage (10 bis 15, 20 bis 25, 30 bis 35), wobei das jeweilige des mindestens einen Kabels (50 bis 52) die erste Windkraftanlage (10 bis 15, 20 bis 25, 30 bis 35) und die andere Windkraftanlagen (10 bis 15, 20 bis 25, 30 bis 35) und die Transformatoreinheit (103 bis 153, 203 bis 253, 303 bis 353) der anderen Windkraftanlagen (10 bis 15, 20 bis 25, 30 bis 35) verbindet;
Messen, für jede der mehreren Windkraftanlagen (10 bis 15, 20 bis 25, 30 bis 35), eines ersten Satzes von Stromvektoren, die an der elektrischen Verbindung fließen, die sich von der Transformatoreinheit (103 bis 153, 203 bis 253, 303 bis 353) zur Hilfsausrüstung (102 bis 152, 202 bis 252, 302 bis 352), von der Transformatoreinheit (103 bis 153, 203 bis 253, 303 bis 353) zum Generator (100 bis 150, 200 bis 250, 300 bis 350) und von der Transformatoreinheit (103 bis 153, 203 bis 253, 303 bis 353) zum Kabel (50 bis 52) erstrecken, Erfassen eines ersten Fehlers unter Berücksichtigung des ersten Satzes von Stromvektoren durch Anwenden eines Differenzstromkriteriums, und Anpassen der Konfiguration des Windparks (1): durch Trennen der elektrischen Verbindung, die sich vom zweiten Wicklungskreis der Transformatoreinheit (103 bis 153, 203 bis 253, 303 bis 353) zum Ausgang des Generators (100 bis 150, 200 bis 250, 300 bis 350) erstreckt, und der elektrischen Verbindung, die sich vom dritten Wicklungskreis der Transformatoreinheit (103 bis 153, 203 bis 253, 303 bis 353) zum Kabel (50 bis 52) erstreckt, wenn der erste Fehler erfasst worden ist, andernfalls Beibehalten der Konfiguration des Windparks (1); und
Erfassen, für jede der mehreren Windkraftanlagen (10 bis 15, 20 bis 25, 30 bis 35), unabhängig vom ersten Fehler, eines zweiten Fehlers unter Berücksichtigung des Betriebsstatus und der angepassten Konfiguration des Windparks (1) und des ersten Stromvektors, der an der von der Transformatoreinheit (103 bis 153, 203 bis 253, 303 bis 353) zum Generator (100 bis 150, 200 bis 250, 300 bis 350) fließt, und weiterem Anpassen der Konfiguration des Windparks (1) durch: Öffnen der elektrischen Verbindung, die sich vom zweiten Wicklungskreis der Transformatoreinheit (103 bis 153, 203 bis 253, 303 bis 353) zum Generator (100 bis 150, 200 bis 250, 300 bis 350) erstreckt, wenn der zweite Fehler erfasst worden ist, andernfalls Beibehalten der Konfiguration des Windparks (1).

2. Schutzverfahren nach Anspruch 1, ferner umfassend:
Berechnen, für das Erfassen des zweiten Fehlers der einen der mehreren ersten Windkraftanlagen (10 bis 15, 20 bis 25, 30 bis 35), eines ersten Schwellenwerts basierend auf dem Betriebsstatus und der angepassten Konfiguration des Windparks (1), Vergleichen der Größe des ersten Stromvektors, der an der sich von der Transformatoreinheit (103 bis 153, 203 bis 253, 303 bis 353) zum Generator (100 bis 150, 200 bis 250, 300 bis 350) erstreckenden elektrischen Verbindung fließt, mit dem ersten Schwellenwert, und Bestimmen des zweiten Fehlers, wenn die Größe des ersten Stromvektors den ersten Schwellenwert überschreitet und die Richtung des ersten Stromvektors vom zweiten Wicklungskreis der Transformatoreinheit (103 bis 153, 203 bis 253, 303 bis 353) zum Generator (100 bis 150, 200 bis 250, 300 bis 350) der Windkraftanlage (10 bis 15, 20 bis 25, 30 bis 35) verläuft.

3. Schutzverfahren nach Anspruch 1 oder 2, ferner umfassend:
Einbeziehen, in den Betriebsstatus des Windparks (1), der vom Generator (100 bis 150, 200 bis 250, 300 bis 350) einer anderen Windkraftanlage (10 bis 15, 20 bis 25, 30 bis 35) gelieferten Energie, der vom Umrichter (105 bis 155, 205 bis 255, 305 bis 355) einer anderen Windkraftanlage (10 bis 15, 20 bis 25, 30 bis 35) absorbierten Blindleistung und der von dem mindestens einen Kabel (50 bis 52) induzierten Blindleistung.

4. Schutzverfahren nach Anspruch 3, ferner umfassend:
Bereitstellen, an den Windpark (1), eines externen Generators (9), der elektrisch mit einer Sammelschiene (8) verbindbar ist, um die Hilfsausrüstung (102 bis 152, 202 bis 252, 302 bis 352) der mehreren Windkraftanlagen (10 bis 15, 20 bis 25, 30 bis 35) mit Energie zu versorgen; und
Einbeziehen, in den Betriebsstatus des Windparks (1), der durch den externen Generator (9) gelieferten Energie.

5. Schutzverfahren nach einem der vorhergehenden Ansprüche, wobei die mehreren Windkraftanlagen (10 bis 15, 20 bis 25, 30 bis 35) in mehreren Gruppen (G1 bis G8) angeordnet sind, die jeweils mindestens eine Windkraftanlage (10 bis 15, 20 bis 25, 30 bis 35) umfassen,
wobei das Schutzverfahren ferner Folgendes umfasst:
Messen, für jede der Gruppen (G1 bis G8) von Windkraftanlagen (10 bis 15, 20 bis 25, 30 bis 35), eines zweiten Satzes von über das Kabel (50 bis 52) zur Windkraftanlagengruppe (G1 bis G8) fließenden Stromvektoren, Erfassen eines dritten Fehlers unter Berücksichtigung des jeweils an der elektrischen Verbindungsstelle zwischen dem dritten Wicklungskreis der Transformatoreinheit (103 bis 153, 203 bis 253, 303 bis 353) der jeweiligen Windkraftanlage (10 bis 15, 20 bis 25, 30 bis 35) in der Windkraftanlagengruppe (G1 bis G8) und dem Kabel (50 bis 52) und dem zweiten Satz von Stromvektoren fließenden Stromvektors durch Anwenden des Differenzstromkriteriums, und Anpassen der Konfiguration des Windparks (1) durch Trennen der elektrischen Verbindung zur ersten Windkraftanlage (10 bis 15, 20 bis 25, 30 bis 35), wenn der dritte Fehler erfasst worden ist, andernfalls Beibehalten der Konfiguration des Windparks (1).

6. Schutzverfahren nach einem der vorhergehenden Ansprüche, wobei der Windpark (1) mehrere Kabel (50 bis 52) und eine Sammelschiene (8) aufweist, die die mehreren Kabel (50 bis 52) elektrisch verbindet, wobei die mehreren Windkraftanlagen (10 bis 15, 20 bis 25, 30 bis 35) in mehreren Sätzen angeordnet sind und die Windkraftanlagen (10 bis 15, 20 bis 25, 30 bis 35) im gleichen Satz mit einem des jeweils einen der mehreren Kabel (50 bis 52) elektrisch verbindbar ist,
wobei das Schutzverfahren ferner Folgendes umfasst:
Messen eines dritten Satzes von Stromvektoren, die in die Sammelschiene (8) hinein und aus dieser heraus fließen, Erfassen eines vierten Fehlers unter Berücksichtigung des dritten Satzes von Stromvektoren durch Anwenden des Differenzstromkriteriums, und Anpassen der Konfiguration des Windparks (1) durch Trennen der elektrischen Verbindung der Sammelschiene (8) zu den ersten Windkraftanlagen (10 bis 15, 20 bis 25, 30 bis 35), wenn der vierte Fehler erfasst worden ist, andernfalls Beibehalten der Konfiguration des Windparks (1) .

7. Schutzverfahren nach Anspruch 6, wobei: der Windpark (1) einen externen Generator (9) aufweist, der elektrisch mit einer Sammelschiene (8) verbindbar ist, um die Hilfsausrüstung (102 bis 152, 202 bis 252, 302 bis 352) der mehreren Windkraftanlagen (10 bis 15, 20 bis 25, 30 bis 35) mit Energie zu versorgen;
wobei das Schutzverfahren ferner Folgendes umfasst:
Messen eines zweiten Stromvektors, der in der von der Sammelschiene (8) zum externen Generator (9) sich erstreckenden elektrischen Verbindung fließt;
Erfassen eines fünften Fehlers unter Berücksichtigung des Betriebsstatus und der Konfiguration des Windparks (1) und des zweiten Stromvektors; und
Anpassen der Konfiguration des Windparks (1) durch Trennen des externen Generators (9), wenn der fünfte Fehler erfasst worden ist, andernfalls Beibehalten der Konfiguration des Windparks (1).

8. Schutzverfahren nach einem der vorhergehenden Ansprüche, ferner umfassend:
Messen, für jede der mehreren Windkraftanlagen (10 bis 15, 20 bis 25, 30 bis 35), eines dritten Stromvektors, der in der vom ersten Wicklungskreis der Transformatoreinheit (103 bis 153, 203 bis 253, 303 bis 353) zur Hilfsausrüstung (102 bis 152, 202 bis 252, 302 bis 352) sich erstreckenden elektrischen Verbindung fließt, Erfassen eines sechsten Fehlers unter Berücksichtigung des Betriebsstatus und der Konfiguration des Windparks (1) und des dritten Stromvektors, und Anpassen der Konfiguration des Windparks (1) durch Trennen der Hilfsausrüstung (102 bis 152, 202 bis 252, 302 bis 352), wenn der sechste Fehler erfasst worden ist, andernfalls Beibehalten der Konfiguration des Windparks (1).

9. Schutzsystem für einen Windpark, der von einem Versorgungsnetz getrennt ist, wobei der Windpark mehrere Windkraftanlagen (10 bis 15, 20 bis 25, 30 bis 35) umfasst und jede der Windkraftanlagen (10 bis 15, 20 bis 25, 30 bis 35) Hilfsausrüstung (102 bis 152, 202 bis 252, 302 bis 352), eine Transformatoreinheit (103 bis 153, 203 bis 253, 303 bis 353) und einen Generator (100 bis 150, 200 bis 250, 300 bis 350) umfasst, wobei die Transformatoreinheit (103 bis 153, 203 bis 253, 303 bis 353) einen ersten Wicklungskreis aufweist, der über einen ersten Schalter (101 bis 151, 210 bis 251, 301 bis 351) elektrisch mit einem Eingang der Hilfsausrüstung (102 bis 152, 202 bis 252, 302 bis 352) verbunden ist, einen zweiten Wicklungskreis, der über einen Umrichter (105 bis 155, 205 bis 255, 305 bis 355) und einen zweiten Schalter (104 bis 154, 204 bis 254, 304 bis 354) elektrisch mit einem Ausgang des Generators (100 bis 150, 200 bis 250, 300 bis 350) verbunden ist, einen dritten Wicklungskreis, der über einen dritten Schalter (800 bis 805, 810 bis 815, 820 bis 825) mit dem jeweils einen des mindestens einen Kabels (50 bis 52) elektrisch verbunden ist;
wobei das Schutzsystem für jede der mehreren Windkraftanlagen (10 bis 15, 20 bis 25, 30 bis 35) Folgendes umfasst:
eine erste Messeinheit (M1), eine zweite Messeinheit (M2), eine dritte Messeinheit (M3), die angepasst sind zum Messen jeweils eines ersten Satzes von Stromvektoren, die am ersten Schalter (101 bis 151, 210 bis 251, 301 bis 351), am zweiten Schalter (104 bis 154, 204 bis 254, 304 bis 354) und am dritten Schalter (800 bis 805, 810 bis 815, 820 bis 825) fließen; und
ein Steuersystem (6), das angepasst ist zum:
Steuern des Schließens des ersten Schalters (101 bis 151, 210 bis 251, 301 bis 351) und des dritten Schalters (800 bis 805, 810 bis 815, 820 bis 825) der mehreren Windkraftanlagen (10 bis 15, 20 bis 25, 30 bis 35);
Auswählen einer ersten Windkraftanlage (10 bis 15, 20 bis 25, 30 bis 35) unter den mehreren Windkraftanlagen (10 bis 15, 20 bis 25, 30 bis 35);
Steuern des Generators (100 bis 150, 200 bis 250, 300 bis 350) der ersten Windkraftanlage (10 bis 15, 20 bis 25, 30 bis 35) zur Energieversorgung der Hilfsausrüstung (102 bis 152, 202 bis 252, 302 bis 352) der ersten Windkraftanlage (10 bis 15, 20 bis 25, 30 bis 35) und Energieversorgung der Hilfsausrüstung (102 bis 152, 202 bis 252, 302 bis 352) anderer Windkraftanlagen (10 bis 15, 20 bis 25, 30 bis 35) durch Schließen des zweiten Schalters (104 bis 154, 204 bis 254, 304 bis 354),
Erfassen eines ersten Fehlers bei einer der mehreren Windkraftanlagen (10 bis 15, 20 bis 25, 30 bis 35) unter Berücksichtigung des ersten Satzes von Stromvektoren durch Anwenden eines Differenzstromkriteriums,
Steuern zum Anpassen der Konfiguration des Windparks (1) durch: Öffnen des zweiten Schalters (104 bis 154, 204 bis 254, 304 bis 354) und dritten Schalters (800 bis 805, 810 bis 815, 820 bis 825) der Windkraftanlage (10 bis 15, 20 bis 25, 30 bis 35), wenn der erste Fehler erfasst worden ist, andernfalls Beibehalten der Konfiguration des Windparks (1);
Erfassen eines zweiten Fehlers der ersten Windkraftanlage (10 bis 15, 20 bis 25, 30 bis 35), unabhängig vom ersten Fehler, unter Berücksichtigung des Betriebsstatus und der angepassten Konfiguration des Windparks (1), und des ersten Stromvektors, der am zweiten Schalter (104 bis 154, 204 bis 254, 304 bis 354) fließt, und Steuern zum weiteren Anpassen der Konfiguration des Windparks (1) durch: Öffnen des zweiten Schalters (104 bis 154, 204 bis 254, 304 bis 354) der ersten Windkraftanlage (10 bis 15, 20 bis 25, 30 bis 35), wenn der zweite Fehler erfasst worden ist, andernfalls Beibehalten der Konfiguration des Windparks (1).

10. Schutzsystem nach Anspruch 9, wobei:
der zweite Fehler bei einer der ersten Windkraftanlagen (10 bis 15, 20 bis 25, 30 bis 35) erfasst wird durch Berechnen eines ersten Schwellenwerts basierend auf dem Betriebsstatus und der angepassten Konfiguration des Windparks (1), Vergleichen der Größe des ersten Stromvektors, der am zweiten Schalter (104 bis 154, 204 bis 254, 304 bis 354) fließt, mit dem ersten Schwellenwert, und Anzeigen des zweiten Fehlers, wenn die Größe des ersten Stromvektors den ersten Schwellenwert überschreitet und die Richtung des ersten Stromvektors vom zweiten Wicklungskreis der Transformatoreinheit (103 bis 153, 203 bis 253, 303 bis 353) zum Generator (100 bis 150, 200 bis 250, 300 bis 350) der Windkraftanlage (10 bis 15, 20 bis 25, 30 bis 35) verläuft.

11. Schutzsystem nach Anspruch 9 oder 10, wobei:
der Betriebsstatus des Windparks (1) die vom Generator (100 bis 150, 200 bis 250, 300 bis 350) von anderen Windkraftanlagen (10 bis 15, 20 bis 25, 30 bis 35) gelieferte Energie, die vom Umrichter (105 bis 155, 205 bis 255, 305 bis 355) anderer Windkraftanlagen (10 bis 15, 20 bis 25, 30 bis 35) absorbierte Blindleistung und die von dem mindestens einen Kabel (50 bis 52) induzierte Blindleistung einschließt.

12. Schutzsystem nach Anspruch 11, wobei:
der Windpark (1) einen externen Generator (9) aufweist, der elektrisch mit einer Sammelschiene (8) verbindbar ist, um die Hilfsausrüstung (102 bis 152, 202 bis 252, 302 bis 352) der mehreren Windkraftanlagen (10 bis 15, 20 bis 25, 30 bis 35) mit Energie zu versorgen; und
der Betriebsstatus des Windparks (1) ferner durch den externen Generator (9) zugeführte Energie umfasst.

13. Schutzsystem nach einem der vorhergehenden Ansprüche, wobei die mehreren Windkraftanlagen (10 bis 15, 20 bis 25, 30 bis 35) in mehreren Gruppen (G1 bis G8) angeordnet sind, die jeweils mindestens eine Windkraftanlage (10 bis 15, 20 bis 25, 30 bis 35) umfassen, die über einen dritten Schalter (800 bis 805, 810 bis 815, 820 bis 825) mit dem jeweils einen mindestens einen Kabel (50 bis 52) elektrisch verbunden ist;
wobei das Schutzsystem ferner Folgendes umfasst:
mindestens einen vierten Schalter (S41 bis S48), der jeweils angeordnet ist, um benachbarte Windkraftanlagengruppen (G1 bis G8) über das Kabel (50 bis 52) elektrisch zu verbinden; und
mindestens eine vierte Messeinheit (M4), für jede der Gruppen (G1 bis G8) von Windkraftanlagen (10 bis 15, 20 bis 25, 30 bis 35), die für Messen von jeweils einem zweiten Satz von Stromvektoren für den jeweils einen der elektrisch mit der Windkraftanlagengruppen (G1 bis G8) verbundenen mindestens vierten Schalter (S41 bis S48) angepasst ist;
wobei:
das Steuersystem (6) ferner angepasst ist zum Erfassen, für jede der Gruppen (G1 bis G8) von Windkraftanlagen (10 bis 15, 20 bis 25, 30 bis 35), eines dritten Fehlers unter Berücksichtigung des zweiten Satzes von Stromvektoren und des jeweils durch den dritten Schalter (800 bis 805, 810 bis 815, 820 bis 825) fließenden Stroms durch Anwenden eines Differenzstromkriteriums, und wenn der dritte Fehler erfasst worden ist, Steuern zum Anpassen der Konfiguration des Windparks (1) durch Öffnen der entsprechenden einen des mindestens einen vierten Schalters (S41 bis S48) und/oder dritten Schalters (800 bis 805, 810 bis 815, 820 bis 825), andernfalls Beibehalten der Konfiguration des Windparks (1).

14. Schutzsystem nach einem der vorhergehenden Ansprüche, wobei: der Windpark (1) mehrere Kabel (50 bis 52) und eine Sammelschiene (8) aufweist, die die mehreren Kabel (50 bis 52) elektrisch verbindet, wobei die mehreren Windkraftanlagen (10 bis 15, 20 bis 25, 30 bis 35) in mehreren Sätzen angeordnet sind und die Windkraftanlagen (10 bis 15, 20 bis 25, 30 bis 35) im gleichen Satz mit einem des jeweils einen der mehreren Kabel (50 bis 52) elektrisch verbunden sind,
wobei das Schutzsystem ferner Folgendes umfasst:
eine fünfte Messeinheit (M5), die angepasst ist zum Messen eines dritten Satzes von Stromvektoren, die in die Sammelschiene (8) hinein und aus dieser heraus fließen;
das Steuersystem (6) ferner angepasst zum Erfassen eines vierten Fehlers unter Berücksichtigung des dritten Satzes von Stromvektoren durch Anwenden eines Differenzstromkriteriums, und, wenn der vierte Fehler erfasst worden ist, Steuern zum Anpassen der Konfiguration des Windparks (1) durch Öffnen der elektrisch der Sammelschiene (8) am nächsten liegenden vierten Schalter (S41 bis 48) und Verbinden der Sammelschiene (8) mit den ersten Windkraftanlagen (10 bis 15, 20 bis 25, 30 bis 35), andernfalls Beibehalten der gegenwärtigen Konfiguration des Windparks (1).

15. Schutzsystem nach Anspruch 14, wobei: der Windpark (1) einen externen Generator (9) aufweist, der über einen fünften Schalter (2) elektrisch mit der Sammelschiene (8) verbunden ist, um die Hilfsausrüstung (102 bis 152, 202 bis 252, 302 bis 352) der mehreren Windkraftanlagen (10 bis 15, 20 bis 25, 30 bis 35) mit Energie zu versorgen;
wobei das Schutzsystem ferner Folgendes umfasst:
eine sechste Messeinheit (M6), die angepasst ist zum Messen eines zweiten Stromvektors, der in der vom fünften Schalter (2) zum externen Generator (9) sich erstreckenden elektrischen Verbindung fließt;
wobei das Schutzsystem ferner angepasst zum Erfassen eines fünften Fehlers unter Berücksichtigung des Betriebsstatus und der Konfiguration des Windparks (1) und des zweiten Stromvektors, und Steuern zum Anpassen der Konfiguration des Windparks (1) durch Öffnen des fünften Schalters (2) wenn der fünfte Fehler erfasst worden ist, andernfalls Beibehalten der Konfiguration des Windparks (1).

## Revendications

1. Procédé de protection pour un parc éolien (1) déconnecté d'un réseau électrique, dans lequel le parc éolien (1) comprend une pluralité d'éoliennes (10 à 15, 20 à 25, 30 à 35), et chacune des éoliennes (10 à 15, 20 à 25, 30 à 35) comprend un équipement auxiliaire (102 à 152, 202 à 252, 302 à 352), une unité de transformateur (103 à 153, 203 à 253, 303 à 353) et une génératrice (100 à 150, 200 à 250, 300 à 350), l'unité de transformateur comporte un premier circuit d'enroulement qui peut être connecté électriquement à une entrée de l'équipement auxiliaire (102 à 152, 202 à 252, 302 à 352), un deuxième circuit d'enroulement qui peut être connecté électriquement à une sortie de la génératrice par l'intermédiaire d'un convertisseur (105 à 155, 205 à 255, 305 à 355), un troisième circuit d'enroulement qui peut être connecté électriquement à l'un respectif d'au moins un câble (50 à 52) ;
dans lequel le procédé de protection comprend :
la connexion de l'équipement auxiliaire (102 à 152, 202 à 252, 302 à 352) de la pluralité d'éoliennes (10 à 15, 20 à 25, 30 à 35) électriquement au premier circuit d'enroulement de l'unité de transformateur (103 à 153, 203 à 253, 303 à 353) de l'éolienne respective de la pluralité d'éoliennes (10 à 15, 20 à 25, 30 à 35) ;
la connexion du troisième circuit d'enroulement de l'éolienne respective de la pluralité d'éoliennes (10 à 15, 20 à 25, 30 à 35) électriquement au câble respectif dudit au moins un câble (50 à 52) ;
la sélection d'une première éolienne (10 à 15, 20 à 25, 30 à 35) de la pluralité d'éoliennes (10 à 15, 20 à 25, 30 à 35) ;
la connexion de la génératrice (100 à 150, 200 à 250, 300 à 350) de la première éolienne (10 à 15, 20 à 25, 30 à 35) électriquement au deuxième circuit d'enroulement de l'unité de transformateur (103 à 153, 203 à 253, 303 à 353) de la première éolienne (10 à 15, 20 à 25, 30 à 35) pour alimenter l'équipement auxiliaire (102 à 152, 202 à 252, 302 à 352) de la première éolienne (10 à 15, 20 à 25, 30 à 35) par l'intermédiaire de l'unité de transformateur (103 à 153, 203 à 253, 303 à 353) de la première éolienne (10 à 15, 20 à 25, 30 à 35) ;
l'alimentation, par la génératrice (100 à 150, 200 à 250, 300 à 350) de la première éolienne (10 à 15, 20 à 25, 30 à 35), de l'équipement auxiliaire (102 à 152, 202 à 252, 302 à 352) des autres éoliennes (10 à 15, 20 à 25, 30 à 35) par l'intermédiaire de l'unité de transformateur (103 à 153, 203 à 253, 303 à 353) de la première éolienne (10 à 15, 20 à 25, 30 à 35), dans lequel le câble respectif dudit au moins un câble (50 à 52) connecte la première éolienne (10 à 15, 20 à 25, 30 à 35) et les autres éoliennes (10 à 15, 20 à 25, 30 à 35), et l'unité de transformateur (103 à 153, 203 à 253, 303 à 353) des autres éoliennes (10 à 15, 20 à 25, 30 à 35) ;
la mesure, pour chacune de la pluralité d'éoliennes (10 à 15, 20 à 25, 30 à 35), d'un premier ensemble de vecteurs de courant circulant au niveau de la connexion électrique s'étendant de l'unité de transformateur (103 à 153, 203 à 253, 303 à 353) à l'équipement auxiliaire (102 à 152, 202 à 252, 302 à 352), de l'unité de transformateur (103 à 153, 203 à 253, 303 à 353) à la génératrice (100 à 150, 200 à 250, 300 à 350), et de l'unité de transformateur (103 à 153, 203 à 253, 303 à 353) au câble (50 à 52), la détection d'un premier défaut en considérant le premier ensemble de vecteurs de courant en utilisant un critère de courant différentiel, et l'adaptation de la configuration du parc éolien (1) : en déconnectant la connexion électrique s'étendant du deuxième circuit d'enroulement de l'unité de transformateur (103 à 153, 203 à 253, 303 à 353) à la sortie de la génératrice (100 à 150, 200 à 250, 300 à 350) et la connexion électrique s'étendant du troisième circuit d'enroulement de l'unité de transformateur (103 à 153, 203 à 253, 303 à 353) au câble (50 à 52) si le premier défaut a été détecté, autrement le maintien de la configuration du parc éolien (1) ; et
la détection, pour chacune de la pluralité d'éoliennes (10 à 15, 20 à 25, 30 à 35) exemptes du premier défaut, d'un deuxième défaut en considérant l'état de fonctionnement et la configuration adaptée du parc éolien (1), et le premier vecteur de courant circulant au niveau de la connexion électrique s'étendant de l'unité de transformateur (103 à 153, 203 à 253, 303 à 353) à la génératrice (100 à 150, 200 à 250, 300 à 350), et l'adaptation supplémentaire de la configuration du parc éolien (1) en : ouvrant la connexion électrique s'étendant du deuxième circuit d'enroulement de l'unité de transformateur (103 à 153, 203 à 253, 303 à 353) à la génératrice (100 à 150, 200 à 250, 300 à 350) si le deuxième défaut a été détecté, autrement le maintien de la configuration adaptée du parc éolien (1).

2. Procédé de protection selon la revendication 1, qui comprend en outre :
le calcul, pour la détection du deuxième défaut de ladite une de la pluralité des premières éoliennes (10 à 15, 20 à 25, 30 à 35), d'un premier seuil sur la base de l'état de fonctionnement et de la configuration adaptée du parc éolien (1), la comparaison de l'amplitude du premier vecteur de courant circulant au niveau de la connexion électrique s'étendant de l'unité de transformateur (103 à 153, 203 à 253, 303 à 353) à la génératrice (100 à 150, 200 à 250, 300 à 350) avec le premier seuil, et la détermination du deuxième défaut si l'amplitude du premier vecteur de courant dépasse le premier seuil et si la direction du premier vecteur de courant circule du deuxième circuit d'enroulement de l'unité de transformateur (103 à 153, 203 à 253, 303 à 353) à la génératrice (100 à 150, 200 à 250, 300 à 350) de l'éolienne (10 à 15, 20 à 25, 30 à 35).

3. Procédé de protection selon la revendication 1 ou 2, qui comprend en outre :
l'inclusion, dans l'état de fonctionnement du parc éolien (1), de la puissance fournie par la génératrice (100 à 150, 200 à 250, 300 à 350) d'une autre éolienne (10 à 15, 20 à 25, 30 à 35), de la puissance réactive absorbée par le convertisseur (105 à 155, 205 à 255, 305 à 355) d'une autre éolienne (10 à 15, 20 à 25, 30 à 35), et de la puissance réactive induite par ledit au moins un câble (50 à 52).

4. Procédé de protection selon la revendication 3, qui comprend en outre :
la fourniture, au parc éolien (1), d'une génératrice externe (9) qui peut être connectée électriquement à une barre omnibus (8) afin d'alimenter l'équipement auxiliaire (102 à 152, 202 à 252, 302 à 352) de la pluralité des éoliennes (10 à 15, 20 à 25, 30 à 35) ; et
l'inclusion, dans l'état de fonctionnement du parc éolien (1), de la puissance fournie par la génératrice externe (9).

5. Procédé de protection selon l'une quelconque des revendications précédentes, dans lequel la pluralité d'éoliennes (10 à 15, 20 à 25, 30 à 35) sont agencées dans une multitude de groupes (G1 à G8), comprenant chacun au moins une éolienne (10 à 15, 20 à 25, 30 à 35),
dans lequel le procédé de protection comprend en outre :
la mesure, pour chacun des groupes (G1 à G8) d'éoliennes (10 à 15, 20 à 25, 30 à 35), d'un deuxième ensemble de vecteurs de courant circulant vers le groupe d'éoliennes (G1 à G8) par l'intermédiaire du câble (50 à 52), la détection d'un troisième défaut en considérant le vecteur de courant circulant respectivement au niveau du point de connexion électrique entre le troisième circuit d'enroulement de l'unité de transformateur (103 à 153, 203 à 253, 303 à 353) de l'éolienne (10 à 15, 20 à 25, 30 à 35) respective dans le groupe d'éoliennes (G1 à G8) et le câble (50 à 52), et le deuxième ensemble de vecteurs de courant en utilisant un critère de défaut différentiel, et l'adaptation de la configuration du parc éolien (1) en déconnectant la connexion électrique à la première éolienne (10 à 15, 20 à 25, 30 à 35) si le troisième défaut a été détecté, autrement le maintien de la configuration du parc éolien (1).

6. Procédé de protection selon l'une quelconque des revendications précédentes, dans lequel : le parc éolien (1) comporte une pluralité de câbles (50 à 52) et une barre omnibus (8) connectant électriquement la pluralité de câbles (50 à 52), la pluralité d'éoliennes (10 à 15, 20 à 25, 30 à 35) sont agencées dans de multiples ensembles, et les éoliennes (10 à 15, 20 à 25, 30 à 35) dans le même ensemble peuvent être connectées électriquement à l'un respectif de la pluralité de câbles (50 à 52) ;
dans lequel le procédé de protection comprend en outre :
la mesure d'un troisième ensemble de vecteurs de courant circulant dans et hors de la barre omnibus (8), la détection d'un quatrième défaut en considérant le troisième ensemble de vecteurs de courant en utilisant un critère de courant différentiel, et l'adaptation de la configuration du parc éolien (1) en déconnectant la connexion électrique de la barre omnibus (8) aux premières éoliennes (10 à 15, 20 à 25, 30 à 35) si le quatrième défaut a été détecté, autrement le maintien de la configuration actuelle du parc éolien (1).

7. Procédé de protection selon la revendication 6, dans lequel : le parc éolien (1) comporte une génératrice externe (9) qui peut être connectée électriquement à la barre omnibus (8) pour alimenter l'équipement auxiliaire (102 à 152, 202 à 252, 302 à 352) de la pluralité des éoliennes (10 à 15, 20 à 25, 30 à 35) ;
dans lequel le procédé de protection comprend en outre :
la mesure d'un deuxième vecteur de courant circulant dans la connexion électrique s'étendant de la barre omnibus (8) à la génératrice externe (9) ;
la détection d'un cinquième défaut en considérant un état de fonctionnement et la configuration du parc éolien (1), et le deuxième vecteur de courant ; et
l'adaptation de la configuration du parc éolien (1) en déconnectant la génératrice externe (9) si le cinquième défaut a été détecté, autrement le maintien de la configuration du parc éolien (1).

8. Procédé de protection selon l'une quelconque des revendications précédentes, qui comprend en outre :
la mesure, pour chacune de la pluralité d'éoliennes (10 à 15, 20 à 25, 30 à 35), d'un troisième vecteur de courant circulant dans la connexion électrique s'étendant du premier circuit d'enroulement de l'unité de transformateur (103 à 153, 203 à 253, 303 à 353) à l'équipement auxiliaire (102 à 152, 202 à 252, 302 à 352), la détection d'un sixième défaut en considérant l'état de fonctionnement et la configuration du parc éolien (1), et le troisième vecteur de courant, et l'adaptation de la configuration du parc éolien (1) en déconnectant l'équipement auxiliaire (102 à 152, 202 à 252, 302 à 352) si le sixième défaut a été détecté, autrement le maintien de la configuration du parc éolien (1).

9. Système de protection pour un parc éolien déconnecté d'un réseau électrique, dans lequel le parc éolien comprend une pluralité d'éoliennes (10 à 15, 20 à 25, 30 à 35), et chacune des éoliennes (10 à 15, 20 à 25, 30 à 35) comprend un équipement auxiliaire (102 à 152, 202 à 252, 302 à 352), une unité de transformateur (103 à 153, 203 à 253, 303 à 353) et une génératrice (100 à 150, 200 à 250, 300 à 350), l'unité de transformateur (103 à 153, 203 à 253, 303 à 353) comporte un premier circuit d'enroulement connecté électriquement à une entrée de l'équipement auxiliaire (102 à 152, 202 à 252, 302 à 352) par l'intermédiaire d'un premier commutateur (101 à 151, 210 à 251, 301 à 351), un deuxième circuit d'enroulement connecté électriquement à une sortie de la génératrice (100 à 150, 200 à 250, 300 à 350) par l'intermédiaire d'un convertisseur (105 à 155, 205 à 255, 305 à 355) et d'un deuxième commutateur (104 à 154, 204 à 254, 304 à 354), un troisième circuit d'enroulement connecté électriquement à l'un respectif d'au moins un câble (50 à 52) par l'intermédiaire d'un troisième commutateur (800 à 805, 810 à 815, 820 à 825) ;
dans lequel le système de protection comprend, pour chacune de la pluralité d'éoliennes (10 à 15, 20 à 25, 30 à 35) :
une première unité de mesure (M1), une deuxième unité de mesure (M2), une troisième unité de mesure (M3), conçues pour mesurer, respectivement, un premier ensemble de vecteurs de courant circulant au niveau du premier commutateur (101 à 151, 210 à 251, 301 à 351), du deuxième commutateur (104 à 154, 204 à 254, 304 à 354), et du troisième commutateur (800 à 805, 810 à 815, 820 à 825) ; et
un système de commande (6), qui est conçu pour :
commander la fermeture du premier commutateur (101 à 151, 210 à 251, 301 à 351) et du troisième commutateur (800 à 805, 810 à 815, 820 à 825) de la pluralité d'éoliennes (10 à 15, 20 à 25, 30 à 35) ;
sélectionner une première éolienne (10 à 15, 20 à 25, 30 à 35) de la pluralité d'éoliennes (10 à 15, 20 à 25, 30 à 35) ;
commander la génératrice (100 à 150, 200 à 250, 300 à 350) de la première éolienne (10 à 15, 20 à 25, 30 à 35) pour alimenter l'équipement auxiliaire (102 à 152, 202 à 252, 302 à 352) de la première éolienne (10 à 15, 20 à 25, 30 à 35) et alimenter l'équipement auxiliaire (102 à 152, 202 à 252, 302 à 352) des autres éoliennes (10 à 15, 20 à 25, 30 à 35) en fermant le deuxième commutateur (104 à 154, 204 à 254, 304 à 354) ;
détecter un premier défaut de l'une de la pluralité d'éoliennes (10 à 15, 20 à 25, 30 à 35) en considérant le premier ensemble de vecteurs de courant en utilisant un critère de courant différentiel ;
commander l'adaptation de la configuration du parc éolien (1) en : ouvrant les deuxième (104 à 154, 204 à 254, 304 à 354) et troisième (800 à 805, 810 à 815, 820 à 825) commutateurs de l'éolienne (10 à 15, 20 à 25, 30 à 35) si le premier défaut a été détecté, autrement maintenir la configuration du parc éolien (1) ;
détecter un deuxième défaut de la première éolienne (10 à 15, 20 à 25, 30 à 35) exempte du premier défaut en considérant l'état de fonctionnement et la configuration adaptée du parc éolien (1), et le premier vecteur de courant circulant au niveau du deuxième commutateur (104 à 154, 204 à 254, 304 à 354), et commander l'adaptation supplémentaire de la configuration du parc éolien (1) en : ouvrant le deuxième commutateur (104 à 154, 204 à 254, 304 à 354) de la première éolienne (10 à 15, 20 à 25, 30 à 35) si le deuxième défaut a été détecté, autrement maintenir la configuration adaptée du parc éolien (1).

10. Système de protection selon la revendication 9, dans lequel :
le deuxième défaut de l'une des premières éoliennes (10 à 15, 20 à 25, 30 à 35) est détecté en calculant un premier seuil sur la base de l'état de fonctionnement et de la configuration adaptée du parc éolien (1), comparant l'amplitude du premier vecteur de courant circulant au niveau du deuxième commutateur (104 à 154, 204 à 254, 304 à 354) avec le premier seuil, et indiquant le deuxième défaut si l'amplitude du premier vecteur de courant dépasse le premier seuil et si la direction du premier vecteur de courant circule du deuxième enroulement de l'unité de transformateur (103 à 153, 203 à 253, 303 à 353) à la génératrice (100 à 150, 200 à 250, 300 à 350) de l'éolienne (10 à 15, 20 à 25, 30 à 35).

11. Système de protection selon la revendication 9 ou 10, dans lequel :
l'état de fonctionnement du parc éolien (1) comprend la puissance fournie par la génératrice (100 à 150, 200 à 250, 300 à 350) des autres éoliennes (10 à 15, 20 à 25, 30 à 35), la puissance réactive absorbée par le convertisseur (105 à 155, 205 à 255, 305 à 355) des autres éoliennes (10 à 15, 20 à 25, 30 à 35), et la puissance réactive induite par ledit au moins un câble (50 à 52).

12. Système de protection selon la revendication 11, dans lequel :
le parc éolien comporte une génératrice externe (9) qui peut être connectée électriquement à une barre omnibus (8) pour alimenter l'équipement auxiliaire (102 à 152, 202 à 252, 302 à 352) de la pluralité des éoliennes (10 à 15, 20 à 25, 30 à 35) ; et
l'état de fonctionnement du parc éolien (1) comprend en outre la puissance fournie par la génératrice externe (9).

13. Système de protection selon l'une quelconque des revendications précédentes, dans lequel la pluralité d'éoliennes (10 à 15, 20 à 25, 30 à 35) sont agencées dans de multiples groupes (G1 à G8), chaque groupe (G1 à G8) comprenant au moins une éolienne (10 à 15, 20 à 25, 30 à 35) qui est connectée électriquement au câble respectif dudit au moins un câble (50 à 52) par l'intermédiaire du troisième commutateur (800 à 805, 810 à 815, 820 à 825) ;
le système de protection comprend en outre :
au moins un quatrième commutateur (S41 à S48), qui est respectivement agencé pour connecter électriquement les groupes d'éoliennes (G1 à G8) adjacents par l'intermédiaire du câble (50 à 52) ; et
au moins une quatrième unité de mesure (M4), pour chacun des groupes (G1 à G8) d'éoliennes (10 à 15, 20 à 25, 30 à 35), qui est conçue pour mesurer, respectivement, un deuxième ensemble de vecteurs de courant pour le commutateur respectif dudit au moins un quatrième commutateur (S41 à S48) connecté électriquement au groupe d'éoliennes (G1 à G8) ;
dans lequel :
le système de commande (6) est en outre conçu pour détecter, pour chacun des groupes (G1 à G8) d'éoliennes (10 à 15, 20 à 25, 30 à 35), un troisième défaut en considérant le deuxième ensemble de vecteurs de courant et le courant circulant respectivement à travers le troisième commutateur (800 à 805, 810 à 815, 820 à 825) en utilisant un critère de courant différentiel, et si le troisième défaut a été détecté pour commander l'adaptation de la configuration du parc éolien (1) en ouvrant le commutateur correspondant dudit au moins un quatrième commutateur (S41 à S48) et/ou le troisième commutateur (800 à 805, 810 à 815, 820 à 825), autrement maintenir la configuration du parc éolien (1).

14. Système de protection selon l'une quelconque des revendications précédentes, dans lequel : le parc éolien (1) comporte une pluralité de câbles (50 à 52) et une barre omnibus (8) connectant électriquement la pluralité de câbles (50 à 52), la pluralité d'éoliennes (10 à 15, 20 à 25, 30 à 35) sont agencées dans de multitudes ensembles, et les éoliennes (10 à 15, 20 à 25, 30 à 35) dans le même ensemble sont connectées électriquement au câble respectif de la pluralité de câbles (50 à 52),
dans lequel le système de protection comprend en outre :
une cinquième unité de mesure (M5), conçue pour mesurer un troisième ensemble de vecteurs de courant circulant dans et hors de la barre omnibus (8) ;
dans lequel le système de commande (6) est en outre conçu pour détecter un quatrième défaut en considérant le troisième ensemble de vecteurs de courant en utilisant un critère de courant différentiel, et si le quatrième défaut a été détecté, commander l'adaptation de la configuration du parc éolien (1) en ouvrant les quatrièmes commutateurs (S41 à S48) électriquement les plus proches de la barre omnibus (8) et en connectant la barre omnibus (8) aux premières éoliennes (10 à 15, 20 à 25, 30 à 35), autrement maintenir la configuration actuelle du parc éolien (1).

15. Système de protection selon la revendication 14, dans lequel : le parc éolien (1) comporte une génératrice externe (9) connectée électriquement à la barre omnibus (8) par l'intermédiaire d'un cinquième commutateur (2) pour alimenter l'équipement auxiliaire (102 à 152, 202 à 252, 302 à 352) de la pluralité des éoliennes (10 à 15, 20 à 25, 30 à 35) ;
dans lequel le système de protection comprend en outre :
une sixième unité de mesure (M6), conçue pour mesurer un deuxième vecteur de courant circulant dans la connexion électrique s'étendant du cinquième commutateur (2) à la génératrice externe (9) ;
dans lequel le système de commande (6) est en outre conçu pour détecter un cinquième défaut en considérant l'état de fonctionnement et la configuration du parc éolien (1), et le deuxième vecteur de courant, et commander l'adaptation de la configuration du parc éolien (1) en ouvrant le cinquième commutateur (2) si le cinquième défaut a été détecté, autrement maintenir la configuration du parc éolien (1).
